# EUROPEAN PATENT APPLICATION

(11) **EP 4 611 098 A1**
(43) Date of publication of application: **03.09.2025**
(21) Application number: 24160807.4
(22) Date of filing: 01.03.2024
(51) Int. Cl.: H01M 10/056

(54) **SOLID ELECTROLYTE AND ELECTRODE FOR A SOLID-STATE BATTERY COMPRISING FUNCTIONAL FILLERS AND DISPERSING AGENTS, AND METHODS FOR PRODUCING THE SAME**

(71) Applicant: SOLiTHOR, 3800 Sint-Truiden (BE); IMEC, 3001 Leuven (BE)
(72) Inventor: Alkarmo, Walid, 4357 Limont (BE); Bardé, Fanny, 3220 Holsbeek (BE)
(74) Representative: De Clercq & Partners

(57) **Abstract**

The technology of the present invention generally relates to the field of power storage devices, and more specifically to a clay mineral modified solid electrolyte comprising a phosphate-based dispersing agent, electrodes, and methods for producing the same. In an aspect of the invention, the method comprises the steps of: mixing an alkoxide compound selected from the group consisting of silica alkoxide, alumina alkoxide, zirconium alkoxide, and mixtures thereof; a polyether compound comprising two end groups of which at least one end group is a functional end group selected from the group consisting of alkoxysilane, alkoxy aluminium, alkoxy zirconium, and combinations thereof; an ionically conductive compound, a metal salt, clay mineral particles, a phosphate-based dispersing agent, and a solvent to form a liquid mixture; causing gelation of the liquid mixture to form a gel mixture; and drying and/or ageing the gel mixture to form a solid electrolyte.

## Description

### FIELD OF THE INVENTION

The technology of the present invention generally relates to the field of power storage devices, and more specifically to clay mineral modified solid electrolytes comprising a phosphate-based dispersing agent, electrodes, and methods for producing the same.

### BACKGROUND

As the demand for high-performance energy storage devices continues to grow, there is a critical need for electrolyte materials that can meet the evolving requirements of modern applications. In particular, conventional liquid electrolytes in batteries pose challenges related to safety, leakage and limited temperature stability. As a promising alternative, solid electrolytes have emerged due to their potential to overcome these drawbacks. Despite the potential advantages of solid electrolytes, the pursuit of a material with a combination of desirable properties, such as high ionic conductivity, mechanical strength, and chemical stability, remains a significant challenge. Existing solid polymer electrolytes and inorganic solid electrolytes often compromise one property for another, limiting their overall effectiveness in practical applications. More recently, composite solid electrolytes consisting of a polymer matrix, inorganic fillers, and alkali metal salts have been proposed to offer a better balance between desirable solid electrolyte properties.

Nonetheless, a remaining major challenge in composite solid electrolyte development is alleviating the inherent incompatibility between the typically more hydrophobic polymer matrix and the typically more hydrophilic fillers, resulting in reduced interfacial stability and decreased ionic conductivity. In particular, filler aggregation may cause local differences in ionic conductivity, leading to inhomogeneous ion transport in the bulk polymer matrix. Moreover, phase separation of the inorganic and organic phase typically results in a lower mechanical strength, which limits their use as a solid electrolyte in a battery system.

Thus, there is a need to address the limitations of current solid electrolytes, and in particular, composite solid electrolytes. It is thus an object of the present invention to provide an improved composite solid electrolyte with enhanced mechanical properties and chemical stability, while maintaining or even improving its ion transference number and ionic conductance. Hence, enhancing the efficiency, safety, and longevity of solid-state batteries.

### SUMMARY OF THE INVENTION

It is an objective of the present invention to address the above-described limitations of the current solid-state battery technology. Therefore, this present disclosure describes a clay mineral modified solid electrolyte comprising a phosphate-based dispersing agent, composite electrodes, and methods for producing the same, with enhanced mechanical properties and chemical stability capable of maintaining or even improving its ionic conductance. The solid electrolyte and electrode described in the present disclosure can be utilized in the field of energy storage devices, and more specifically in the production of energy storage devices such as batteries, supercapacitors, or fuel cells.

The herein disclosed method relates to a sol-gel process, wherein an alkoxide compound and a polyether compound are converted into a cross-linked porous composite network, and wherein an electrolyte, an inorganic filler, and a dispersing agent are grafted in said network. Advantageously, it was found that the addition of a specific phosphate-based dispersing agent to the sol (i.e., liquid curing mixture) can improve the dispersion of the inorganic filler, preferably having a tubular or a nanotubular shape, during the gel formation. Homogeneous dispersion or distribution of the inorganic filler by the phosphate-based dispersing agent has the advantage that the mechanical integrity, chemical stability, and thermal resistance of the resulting solid electrolyte can be improved without compromising ionic conductivity.

Without wishing to be bound by theory, it has been found that the phosphate-based dispersing agent may modify the surface of the inorganic filler, preferably through non-covalent interactions with the surface, which reduces phase separation and agglomeration of the inorganic filler. Hence, by adding a phosphate-based dispersing agent during the curing process, the present disclosure is able to overcome several drawbacks of conventional (composite) solid electrolytes.

The herein disclosed method may therefore avoid the need to covalently attach polymers to the surface of the inorganic filler to improve the compatibility between the inorganic filler and the composite network. Moreover, it may further avoid the use of ultrasonic treatment to improve the dispersion of the filler in the composite network, which may negatively affect the performance of the solid electrolyte.

An advantage of the present invention is that the herein disclosed (composite) solid electrolyte provides for an enhanced mobility (i.e., diffusion rate) of alkali metal ions (e.g. Li cations) comprised in the electrolyte. This may improve both the charge and discharge rate and reduce polarization (e.g., due to uneven charge distribution) when used in an electrochemical cell. Hence, a faster charge-discharge cycle can be achieved, which is crucial for instance in electric vehicle applications.

Another advantage of the present invention is that the composition and homogeneous structure of the (composite) solid electrolyte minimizes the presence of interfaces or discontinuities within the solid electrolyte, which may reduce energy losses. Moreover, this may significantly simplify the manufacturing and processing of different types of energy storage devices comprising the solid electrolyte as described herein.

Yet another advantage of the present invention is that the herein disclosed (composite) solid electrolyte is characterized by an increased thermal stability and flame retardancy. In particular, the use of phosphate-based dispersing agents may provide a (composite) solid electrolyte with improved flame retardancy.

An overview of various other aspects of the technology of the present invention is given below, after which specific embodiments will be described in more detail. This overview is meant to aid the reader in understanding the technological concepts more quickly, but it is not meant to identify the most important or essential features thereof, nor is it meant to limit the scope of the present invention, which is limited only by the claims. The invention is defined by the independent patent claims. The dependent claims define advantageous embodiments of the invention.

An aspect of the invention relates to an inorganic filler modified solid electrolyte, preferably a clay mineral modified solid electrolyte, characterized by comprising the following components:
- a porous composite network obtained or obtainable by a reaction of an alkoxide compound and a polyether compound;
- an electrolyte comprising an ionically conductive compound in which a metal salt is dissolved;
- inorganic filler, preferably clay mineral particles; and
- a phosphate-based dispersing agent;

wherein the alkoxide compound is selected from the group consisting of silica alkoxide, alumina alkoxide, zirconium alkoxide, and mixtures thereof; and
wherein the polyether compound comprises two end groups of which at least one end group is a functional end group selected from the group consisting of alkoxysilane, alkoxy aluminium, alkoxy zirconium, and combinations thereof.

It should be understood that the electrolyte, inorganic filler, and dispersing agent are at least partially contained or incorporated within the porous composite network as described herein. In certain preferred embodiments the electrolyte, inorganic filler, and dispersing agent are fully contained or incorporated within the porous composite network as described herein.

In certain preferred embodiments, the phosphate-based dispersing agent is a phosphate salt; preferably a multivalent phosphate salt comprising an alkali metal ion, an alkaline earth metal ion, an ammonium ion, and/or an organoammonium ion.

In certain preferred embodiments, the phosphate-based dispersing agent is selected from the group consisting of monolithium phosphate, dilithium phosphate, trilithium phosphate, monolithium diphosphate, dilithium diphosphate, trilithium diphosphate, tetralithium diphosphate, lithium triphosphate, lithium tetraphosphate, lithium metaphosphate, lithium trimetaphosphate, lithium hexametaphosphate, lithium pyrophosphate, dilithium pyrophosphate, lithium polyphosphate, monosodium phosphate, disodium phosphate, trisodium phosphate, monosodium diphosphate, disodium diphosphate, trisodium diphosphate, tetrasodium diphosphate, sodium triphosphate, sodium tetraphosphate, sodium metaphosphate, sodium trimetaphosphate, sodium hexametaphosphate, sodium pyrophosphate, disodium pyrophosphate, sodium polyphosphate, monopotassium phosphate, dipotassium phosphate, tripotassium phosphate, monopotassium diphosphate, dipotassium diphosphate, tripotassium diphosphate, tetrapotassium diphosphate, potassium triphosphate, potassium tetraphosphate, potassium metaphosphate, potassium trimetaphosphate, potassium hexametaphosphate, potassium pyrophosphate, dipotassium pyrophosphate, potassium polyphosphate hydrates thereof and/or mixtures thereof; preferably wherein the phosphate-based dispersing agent is lithium polyphosphate, sodium polyphosphate, or potassium polyphosphate.

In certain preferred embodiments, the inorganic filler, preferably clay mineral particles, comprises structures with a tubular or nanotubular shape having a negatively charged exterior and a positively charged hollow interior.

In certain preferred embodiments, the inorganic filler, preferably clay mineral particles, comprises halloysite nanotubes (HNT) comprising aluminosilicate (Al₂Si₂O₅(OH)₄).

In certain preferred embodiments, the amount of inorganic filler, preferably clay mineral particles, is at least 0.1 wt.% to at most 10.0 wt.%, based on the total weight of the inorganic filler modified solid electrolyte, preferably the clay mineral modified solid electrolyte.

In certain preferred embodiments, the amount of phosphate-based dispersing agent is at least 0.1 wt.% to at most 20.0 wt.%, based on the weight of the inorganic filler, preferably clay mineral particles.

In certain preferred embodiments, the inorganic filler modified solid electrolyte, preferably the clay mineral modified solid electrolyte is obtainable or obtained by means of any one of the methods as disclosed herein.

A further aspect of the present invention relates to a method for preparing an inorganic filler modified solid electrolyte, preferably a clay mineral modified solid electrolyte, comprising the steps of:
- mixing an alkoxide compound selected from the group consisting of silica alkoxide, alumina alkoxide, zirconium alkoxide, and mixtures thereof; a polyether compound comprising two end groups of which at least one end group is a functional end group selected from the group consisting of alkoxysilane, alkoxy aluminium, alkoxy zirconium, and combinations thereof; an ionically conductive compound; a metal salt; an inorganic filler, preferably clay mineral particles; a phosphate-based dispersing agent; and a solvent to form a liquid mixture;
- causing gelation of the liquid mixture to form a gel mixture; and
- drying and/or ageing the gel mixture to form a solid electrolyte.

Another aspect of the invention relates to an electrode comprising the inorganic filler modified solid electrolyte, preferably the clay mineral modified solid electrolyte, as disclosed herein, or obtained or obtainable by means of the method as disclosed herein; and an electrode active material.

In certain preferred embodiments, silica alkoxide is selected from the group consisting of tetramethyl orthosilicate (TMOS), tetraethyl orthosilicate (TEOS), methyltriethoxysilane (MTES), tetraisopropyl orthosilicate (TIOS), tetrapropyl orthosilicate (TPOS), tetrabutyl orthosilicate (TBOS), substitutions thereof, and/or a combination thereof.

In certain preferred embodiments, alumina alkoxide is selected from the group consisting of aluminium trimethoxide, aluminium triethoxide, aluminium triisopropoxide, aluminium tributoxide, substitutions thereof, and/or a combination thereof.

In certain preferred embodiments, zirconium alkoxide is selected from the group consisting of zirconium tetramethoxide, zirconium tetraethoxide, zirconium tetraisopropoxide, zirconium tetrabutoxide, substitutions thereof, and/or a combination thereof.

In certain preferred embodiments, the polyether compound is selected from the group consisting of polyethylene glycol, polypropylene glycol, polytetrahydrofuran, and copolymers and/or mixtures thereof. In certain preferred embodiments, the polyether compound comprises one reactive functional end group selected from the group consisting of alkoxysilane, alkoxy aluminium, alkoxy zirconium, and combinations thereof; and one non-reactive alkyl end group, preferably wherein the polyether compound has a number of repeating units n ranging from 5 to 2000.

In certain preferred embodiments, the polyether compound comprises two reactive functional end groups selected from the group consisting of alkoxysilane, alkoxy aluminium, alkoxy zirconium, and combinations thereof; preferably wherein the polyether compound has a number of repeating units n ranging from 5 to 15000.

Another aspect of the present invention relates to an electrode comprising a solid electrolyte composition, preferably an inorganic filler modified solid electrolyte as disclosed herein or prepared according to the method of an aspect of the invention as described herein, and one or more electrode active material.

In certain preferred embodiments, the inorganic filler modified solid electrolyte, preferably the clay mineral modified solid electrolyte, forms a covering layer on the electrode active material; preferably wherein the covering layer is a uniform and/or homogenous covering layer with a preferred layer thickness after drying and before compression of below about 200 µm, more preferably below about 150 µm, more preferably still below about 100 µm; more preferably still below about 60 µm.

A further aspect of the present invention relates to an electrochemical energy storage device, comprising one or more positive electrodes, one or more negative electrodes; and the inorganic filler modified solid electrolyte, preferably the clay mineral modified solid electrolyte, as disclosed herein, or obtained or obtainable by means of the method as disclosed herein, preferably wherein the clay mineral modified solid electrolyte forms a covering layer on at least one of the one or more positive electrode and/or one or more negative electrode.

In certain preferred embodiments, the electrochemical energy storage device is an alkali metal battery, preferably a lithium and/or a sodium battery.

It is understood that any of the herein described embodiments relating to the method for forming an inorganic filler-modified solid electrolyte also constitute embodiments of the inorganic filler-modified solid electrolyte, or the use of said inorganic filler-modified solid in an electrode or an electrochemical energy storage device. Preferred embodiments of the method for forming an inorganic filler constitute preferred embodiments of the inorganic filler-modified solid electrolyte.

### BRIEF DESCRIPTION OF THE DRAWINGS

The following description of the figures relate to specific embodiments of the disclosure which are merely exemplary in nature and not intended to limit the present teachings, their application or uses. It should be appreciated that certain drawings are a schematic representation of the claimed invention with enlarged proportions of components for easier understanding.
**FIG 1****.** depicts a sol-gel process (left) and a transparent clay modified solid electrolyte as obtained in Example 2 (right).
**FIG 2****.** is a scanning electron microscopy (SEM) image of a transparent clay modified solid electrolyte as obtained in Example 2.
**FIG 3****.** depicts a phase separated sol-gel process (left) and an inhomogeneous clay modified solid electrolyte as obtained in Comparative Example 1 (right).
**FIG 4****.** is a scanning electron microscopy (SEM) image of an inhomogeneous clay modified solid electrolyte as obtained in Comparative Example 1.
**FIG 5****.** is a graph illustrating the ionic conductivity of clay modified solid electrolyte 3-7 from Example 2 and Comparative Example 1, as a function of the weight percentage of halloysite inorganic filler.
**FIG 6****.** is a graph illustrating the storage modulus (G') and loss modulus (G") as a function of frequency of clay modified solid electrolyte 3-7 from Example 2 and Comparative Example 1.
**FIG 7****.** is a graph illustrating the damping factor of clay modified solid electrolyte 3-7 from Example 2 and Comparative Example 1, as a function of the weight percentage of halloysite inorganic filler.
**FIG 8****.** is a graph illustrating the current density as a function of potential (V vs. Li/Li⁺) of clay modified solid electrolyte 9 of Example 3 and Comparative Example 2.
**FIG 9****.** is a graph illustrating the current density as a function of time of clay modified solid electrolyte 9 of Example 3 and Comparative Example 2.
**FIG 10****.** is a thermogram illustrating the weight percentage of solid electrolyte as a function of temperature of clay modified solid electrolyte 9 of Example 3, Comparative Example 2, halloysite inorganic filler, and SPEG.
**FIG 11****.** is a graph illustrating the voltage profile of a lithium battery of Example 7 comprising clay modified solid electrolyte 9 of Example 3.
**FIG 12****.** is a graph illustrating the voltage profile of a lithium battery of Example 7 comprising Comparative example 2.
**FIG 13****.** is a graph illustrating the voltage profile of a lithium battery of Example 7 comprising clay modified solid electrolyte 9 of Example 3 and an overfill of around 30 µm thickness.
**FIG 14****.** is a graph illustrating the voltage profile of a lithium battery of Example 7 comprising Comparative example 2 and an overfill of around 30 µm thickness.
**FIG 15****.** is a graph illustrating the discharge specific capacity and coulombic efficiency of Example 7 comprising clay modified solid electrolyte 9 of Example 3 and an overfill of around 30 µm thickness, as a function of the number of cycles.
**FIG 16****.** is a graph illustrating the discharge specific capacity and coulombic efficiency of Example 7 comprising Comparative example 2 and an overfill of around 30 µm thickness, as a function of the number of cycles.

### DETAILED DESCRIPTION

In the following detailed description, the technology underlying the present invention will be described by means of different aspects thereof. It will be readily understood that the aspects of the present invention, as generally described herein, and illustrated in the figures, can be arranged, substituted, combined, and designed in a wide variety of different configurations, all of which are explicitly contemplated and make part of this invention. This description is meant to aid the reader in understanding the technological concepts more easily, but it is not meant to limit the scope of the present invention, which is limited only by the claims. When describing the invention, the terms used are to be construed in accordance with the following definitions, unless the context dictates otherwise.

In the present description, technology is described by means of which a solid electrolyte can be produced that is suitable for the manufacturing of a (solid-state) battery.

An aspect of the present invention relates to a method for preparing an inorganic filler modified solid electrolyte, comprising the steps of:
- mixing an alkoxide compound, a polyether compound, an ionically conductive compound, a metal salt, an inorganic filler, a dispersing agent, and a solvent to form a liquid mixture;
- causing gelation of the liquid mixture to form a gel mixture; and
- drying and/or ageing the gel mixture to form a solid electrolyte.

Another aspect of the present invention relates to a method for preparing a clay mineral modified solid electrolyte, comprising the steps of:
- mixing an alkoxide compound, preferably selected from the group consisting of silica alkoxide, alumina alkoxide, zirconium alkoxide, and mixtures thereof; a polyether compound, preferably comprising two end groups of which at least one end group is a functional end group selected from the group consisting of alkoxysilane, alkoxy aluminium, alkoxy zirconium, and combinations thereof; an ionically conductive compound; a metal salt, preferably an alkali metal salt; clay mineral particles; a phosphate-based dispersing agent; and a solvent to form a liquid mixture;
- causing gelation of the liquid mixture to form a gel mixture; and
- drying and/or ageing the gel mixture to form a solid electrolyte.

Particularities and features of the invention's method steps, starting materials used, and the resulting modified solid electrolyte will be explained in greater detail below.

The term "electrolyte" as used herein refers to a medium that allows the movement of ions (e.g., protons, cations, and/or anions), but is configured to be electrically insulating and therefore does not conduct electrons.This ensures that the electrical energy of an energy storage device is stored and released through an external circuit.

The term "solid" as used herein refers to a unit of material in a substantially solid state as a whole at operating temperatures, for example at room temperature and up to 100 °C, preferably up to 200 °C, or up to 300 °C, or up to 500°C. Partial inclusion of a liquid is not excluded. Gels, for example, are considered "solid" within the present disclosure. Hence, the "solid electrolyte" as disclosed herein refers to the electrolyte being in solid state as a whole at operating temperatures so that it is suitable for fast ion conduction. Non-limiting examples of applications for solid electrolytes disclosed herein include solid-state batteries and capacitors, wherein the solid electrolyte is typically interposed between oppositely charged electrodes (e.g., cathodes and anodes). Unless noted otherwise, the invention is not necessarily limited to the aforementioned applications. Alternatively or in combination, the electrolyte can be referred to as a "composite electrolyte" or "composite solid electrolyte" based on the combination of constituent materials, more specifically, a combination of organic and inorganic material resulting in inorganic-organic hybrid material.

The herein disclosed solid electrolyte may refer to pellets or free-standing films that can be produced by hot pressing powders and/or particles. In some embodiments, the solid electrolyte pellets have a size or diameter of at least 100.0 mm, or at least 1.0 cm, or at least 2.0 cm.

Alternatively or in combination, the solid electrolyte may be coated on and/or impregnated in an electrode active material, by applying a a solid electrolyte precursor solution and/or or pre-gelated solid electrolyte solution onto said electrode active material as described later. In this way, a composite electrode comprising the composite solid electrolyte can be obtained, with or without an overfill (i.e., an amount of solid electrolyte surpassing the normal capacity of the electrode active material).

The herein disclosed method generally refers to a sol-gel process and involves the production of a conductive medium through the polymerization of suitable monomers (such as metal alkoxides and/or non-metal alkoxides) in a solvent, which produce a colloidal suspension (i.e., "sol"), and upon further agglomeration and polymerization, a solidified, wet gel is formed, which can be dried and/or aged to form a dry gel. Hence, the method for preparing the solid electrolyte involves a wet cross-linking technique that can be initiated by the hydrolysis and/or alcoholysis of an alkoxide compound, optionally in the presence of an organic solvent, thereby forming an integrated three-dimensional network (i.e., "gel").

In addition to the alkoxide compound, several starting materials may participate in the sol-gel process to obtain a modified solid electrolyte with desirable properties. Said starting materials (e.g., the polyether compound) may participate in the sol-gel process via copolymerization, which results in covalent integration into the network. Alternatively or in combination, said starting materials (e.g., the ionically conductive compound, the metal salt, the inorganic filler, and the dispersing agent) may participate in the sol-gel process through non-covalent interactions, such as hydrogen bonding or ionic interactions, which embeds (i.e., intercalates) the starting material in between the polymer chains of the network structure. Typically, starting materials such as inorganic filler are often perceived to be more difficult to disperse or intercalate into the network structure during the sol-gel process, resulting in phase-separated materials. A first step of the method as disclosed herein involves the mixing of an alkoxide compound; a polyether compound; an ionically conductive compound; a metal salt, preferably an alkali metal salt; an inorganic filler, preferably clay mineral particles; a dispersing agent, preferably a phosphate-based dispersing agent; and a solvent to form a liquid mixture.

The term "liquid mixture" as used herein refers to a liquid medium, which may comprise suspended solid structures of varying size. In particular, the liquid mixture may gradually evolve from a colloidal suspension (i.e., sol) to a gel-like network. For example, and in an embodiment, the liquid mixture may be formed by placing the alkoxide compound, the polyether compound, the ionically conductive compound, the metal salt, the inorganic filler, the dispersing agent, and the solvent into a container and subsequently mixing the components at a low temperature such as between 20 °C and 70 °C, or 30 °C and 60 °C, or 30 °C and 40 °C. The liquid mixture is stirred until all components are substantially dissolved, for example, by using a magnetic stirrer.

Optionally, the ionically conductive compound and the metal salt may be dissolved in a solvent first, such as a water-alcohol mixture (e.g., water-methanol, water-ethanol, water-isopropanol), to improve the solubility of the components comprised in the liquid mixture.

In some embodiments, the solvent may comprise de-ionized water and an alcohol-based co-solvent, preferably propylene glycol methyl ether (PGME). Relevant alcohol-based co-solvents include methanol, ethanol, propan-1-ol, butan-1-ol, pentan-1-ol, hexan-1-ol, heptan-1-ol, octan-1-ol, and mixtures thereof. Preferably, the alcohol-based co-solvent is a glycol ether selected from the group consisting of: ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, diethylene glycol monomethyl ether, diethylene glycol monoethyl ether, diethylene glycol mono-n-butyl ether, dipropyleneglycol methyl ether, propylene glycol methyl ether, or mixtures thereof. Most preferably, the alcohol co-solvent is propylene glycol methyl ether. The concentration of the optional solvent will depend on the nature and amount of the silicon precursor and/or ionic liquid electrolyte.

Optionally, the alkoxide compound, the polyether compound, the ionically conductive compound, and the metal salt may de dissolved in a solvent first, such as a water-alcohol mixture (e.g., water-methanol, water-ethanol, water-isopropanol), to improve the solubility of the components comprised in the liquid mixture. Subsequently, the inorganic filler and the dispersing agent may be added to the initially formed mixture.

In particular embodiments, the method as disclosed herein provides that the liquid mixture may be partially gelled before addition of the inorganic filler and the dispersing agent. Partial gelation may provide the formation of larger aggregates and/or continuous clusters, resulting in a partial gel mixture with a viscosity higher than the viscosity of the initial mixture. This has the advantage that the partially gelled mixture may provide easier handling and application to embed the inorganic filler and the dispersing agent in the pre-gelled structure. Moreover, the curing time may be significantly reduced using a partially gelled mixture. In an alternative embodiment the liquid mixture may be kept liquid to avoid the partial gelation.

The term "dispersing agent" (synonymous with diffusing agent, dispersant, dispersing additive, or wetting agent) as used herein refers to a substance or compound that facilitates the dissolution of an inorganic filler in the liquid mixture by reducing the interfacial tension between two phases or components. Moreover, it has now been found that the addition of a dispersing agent, specifically a phosphate-based dispersing agent, can significantly improve the chemical compatibility between the inorganic filler and the network structure of the solid electrolyte.

Homogeneous dispersion or distribution of the inorganic filler in the three-dimensional network by the dispersing agent has the advantage that the mechanical integrity, chemical stability, and thermal resistance of the resulting solid electrolyte can be improved without compromising (or even improving) ionic conductivity.

In preferred embodiments, the dispersing agent may be a phosphate-based dispersing agent comprising at least one phosphate (e.g., orthophosphate, dihydrogen phosphate, or hydrogen phosphate) anion. Said phosphate-based dispersing agent may be commercially available as salt(s) comprising at least one phosphate anion.

In more preferred embodiments, the phosphate-based dispersing agent may be a phosphate salt. Preferably, said phosphate salt is a monovalent or multivalent phosphate salt, such as a divalent, trivalent, tetravalent phosphate salt. Advantageously, multivalent interactions of the phosphate salt with the surface of other materials, such as an inorganic filler as disclosed herein, may modify the surface properties of said inorganic filler to improve heat resistance, mechanical stability and chemical compatibility.

In some embodiments, the phosphate salt may comprise an alkali metal ion (cation) selected from the group consisting of lithium, sodium, potassium, rubidium, and mixtures thereof.

In some embodiments, the phosphate salt may comprise an alkaline earth metal ion (cation) selected from the group consisting of beryllium, magnesium, calcium, strontium, barium, and mixtures thereof.

In some embodiments, the phosphate salt may comprise an ammonium ion (NH₄⁺, cation) and/or an organoammonium ion (cation).

In preferred embodiments, the phosphate-based dispersing agent may be a polyphosphate salt. The term "polyphosphate" as used herein refers to phosphate anions which have been polymerized by dehydration to form a polymer of the phosphate anion. The term "polyphosphate salt" as described herein refers to said polymer of the phosphate anion with one or more counterion. Polyphosphates can exist as linear or cyclic materials or mixtures thereof. Preferred polyphosphates used herein are linear materials comprising only low levels of cyclic materials. Polyphosphates can also be characterized by the average anion chain length of the polymer anion. Therefore, and in some embodiments, the polyphosphate salt may comprise a plurality of polyphosphate chains having a backbone comprising oxygen-phosphate bonds having "n" phosphate units, with "n" being a positive integer.

In some embodiments, each phosphate unit may include a counterion, e.g. an alkali metal cation, an alkaline earth metal cation, an ammonium cation or an organoammonium cation, as described above.

In some embodiments, the amount of phosphate units "n" of the polyphosphate salt as described herein may be at least 10.0, such as between 10.0 and 40.0, or between 15.0 and 30.0 or between 18.0 and 30.0, and combinations thereof.

The advantage of the polyphosphate salt in particular is that it can modify the surface properties of the inorganic filler to improve the dispersion or distribution of said filler in the network. Moreover, it can simultaneously activate the ionic conductivity of the inorganic filler, creating continuous ion channels for alkali metal ions in the bulk of the solid electrolyte, which may significantly improve ion transportation. Hence, when applied in an electrochemical energy storage device, said solid electrolyte may provide an enhanced charge and discharge rate.

In particular embodiments, the phosphate-based dispersing agent may be selected from the group consisting of monolithium phosphate, dilithium phosphate, trilithium phosphate, monolithium diphosphate, dilithium diphosphate, trilithium diphosphate, tetralithium diphosphate, lithium triphosphate, lithium tetraphosphate, lithium metaphosphate, lithium trimetaphosphate, lithium hexametaphosphate, lithium pyrophosphate, dilithium pyrophosphate, lithium polyphosphate, monosodium phosphate, disodium phosphate, trisodium phosphate, monosodium diphosphate, disodium diphosphate, trisodium diphosphate, tetrasodium diphosphate, sodium triphosphate, sodium tetraphosphate, sodium metaphosphate, sodium trimetaphosphate, sodium hexametaphosphate, sodium pyrophosphate, disodium pyrophosphate, sodium polyphosphate, monopotassium phosphate, dipotassium phosphate, tripotassium phosphate, monopotassium diphosphate, dipotassium diphosphate, tripotassium diphosphate, tetrapotassium diphosphate, potassium triphosphate, potassium tetraphosphate, potassium metaphosphate, potassium trimetaphosphate, potassium hexametaphosphate, potassium pyrophosphate, dipotassium pyrophosphate, potassium polyphosphate hydrates thereof and/or mixtures thereof; preferably wherein the phosphate-based dispersing agent is lithium polyphosphate, sodium polyphosphate, or potassium polyphosphate.

In particular embodiments, the phosphate-based dispersing agent may be selected from the group consisting of monosodium phosphate, disodium phosphate, trisodium phosphate, monosodium diphosphate, disodium diphosphate, trisodium diphosphate, tetrasodium diphosphate, sodium triphosphate, sodium tetraphosphate, sodium metaphosphate, sodium trimetaphosphate, sodium hexametaphosphate, sodium pyrophosphate, disodium pyrophosphate, sodium polyphosphate, monopotassium phosphate, dipotassium phosphate, tripotassium phosphate, monopotassium diphosphate, dipotassium diphosphate, tripotassium diphosphate, tetrapotassium diphosphate, potassium triphosphate, potassium tetraphosphate, potassium metaphosphate, potassium trimetaphosphate, potassium hexametaphosphate, potassium pyrophosphate, dipotassium pyrophosphate, potassium polyphosphate hydrates thereof and/or mixtures thereof; preferably wherein the phosphate-based dispersing agent is sodium polyphosphate or potassium polyphosphate.

In particular embodiments, the phosphate-based dispersing agent may be selected from the group consisting of monosodium phosphate, disodium phosphate, trisodium phosphate, monosodium diphosphate, disodium diphosphate, trisodium diphosphate, tetrasodium diphosphate, sodium triphosphate, sodium tetraphosphate, sodium metaphosphate, sodium trimetaphosphate, sodium hexametaphosphate, sodium pyrophosphate, disodium pyrophosphate, sodium polyphosphate; preferably wherein the phosphate-based dispersing agent is sodium polyphosphate or sodium hexametaphosphate.

The person skilled in the art understands that the configuration and composition of the phosphate-based dispersing agent is adapted to match the inorganic filler (e.g., clay mineral particles) and the metal salt comprised in the modified solid electrolyte. For instance, a lithium counterion may be preferred in a lithium battery.

In accordance with the method as disclosed herein, the solid electrolyte may be an inorganic filler modified solid electrolyte. The term "modified" as used herein means that the solid electrolyte contains at least one inorganic filler. Preferably, the inorganic filler is homogeneously (i.e., evenly) distributed in the three-dimensional network through the dispersing agent as described above. In particular, the inorganic filler may be evenly dispersed in the liquid mixture comprising the reactive monomers for polymerization. Advantageously, the present invention provides that, after gelation of the liquid mixture, the inorganic filler is positioned (i.e., intercalated) between the polymer chains of the gel. In other words, the method as described herein provides for the direct "insertion" of inorganic material in the free volume of the network, which reinforces said network.

In preferred embodiments, the inorganic filler may be clay mineral particles, preferably clay mineral nanoparticles. Clay minerals are naturally occurring minerals that are abundant in the Earth's crust. They belong to the phyllosilicate group (i.e., hydrous aluminium phyllosilicates) and are characterized by their layered and crystalline structure. The clay minerals may be natural clay minerals, but synthetic clay minerals are equally viable.

In preferred embodiments, the clay mineral particles may have a particle size ranging between 1.0 and 100.0 nm. It has been found that clay minerals of a smaller particle size, may provide a higher compatibility between the network and the clay mineral particles.

The clay mineral particles may comprise nanoparticles, preferably with a fibrous or tubular structure. This has the advantage that said nanoparticles may simultaneously reinforce the network and provide a high surface area for interaction with the alkali metal salt, which can result in an increase in mechanical strength and ionic conductivity of the modified solid electrolyte.

In certain embodiments, the clay mineral particles may comprise (nano)structures having an elongated shape, such as a fibrous or a needle-like structure. This elongated shape may improve its absorbent and binding properties due to the increased surface area available for interactions. Alternatively, the clay mineral particles can comprise individual nanoparticles that align to an elongated structure. Preferably, the elongated shapes may include nanowires, nanofibers, nanowires, nanotubes, and/or nanorods.

In certain embodiments, the clay mineral particles may comprise (nano)structures comprising rolled or tubular layers, advantageously with a hollow central core or lumen. The external and internal surfaces of the clay mineral particles can be functionalized or modified to enhance compatibility with specific substances such as described herein.

In certain embodiments, the clay mineral particles may comprise (nano)structures with a tubular shape having a negatively charged exterior and a positively charged interior. Without wishing to be bound by theory, it has been found that the negatively charged exterior of the clay mineral particles is capable of interacting with the metal salt comprised in the solid electrolyte. As a result, the clay mineral particles may aid in the dissociation of the metal salt and improve the ionic conductivity of the solid electrolyte. As such, the electrochemical and thermal stability can be enhanced by adding clay mineral particles to the solid electrolyte.

In certain embodiments, the clay mineral particles may comprise (nano)structures with a (nano)tubular shape having a hollow interior. Advantageously, the (nano)tubular shape consist of a plurality of rolled layers wherein each layers can comprise at least two different materials. For example, the clay mineral tubular shape may be comprised of rolled alumina and silica layers, the layers may be alternating or successive layers.

In certain embodiments, the clay mineral particles may be selected from the group consisting of palygorskite, attapulgite, kaolin, smectite, illite, chlorite, sepiolite, vermiculite, and mixtures thereof; preferably palygorskite, kaolin and/or attapulgite.

In certain embodiments, the clay mineral particles may comprise halloysite nanotubes (HNT). As used herein, the term "halloysite nanotubes" refers to a tubular 3D nanostructure having oppositely charged surfaces, more specifically, a negatively charged external surface, for example silica surface, and a positively charged interior surface, for example aluminol surface. In a preferred embodiment, HNT comprises aluminosilicate (Al₂Si₂O₅(OH)₄), preferably from natural nano-clay.

Advantageously, it has been found herein that the even distribution of HNT into the solid electrolyte can immobilize the counterions of alkali metal ions, resulting in an improved dissociation of the alkali metal salt (i.e., less ion-counterion interactions) and enhanced mobility of the alkali metal ion. This has the advantage that the modified solid electrolyte as described herein may be characterized by a high alkali metal ion transference number and simultaneously a reduction in the polarization due to an ion concentration gradient, thereby resulting in a homogeneous alkali metal ion deposition and dissolution.

Particularly, the oppositely charged HNT surfaces, preferably modified with the phosphate-based dispersing agent, can separate alkali metal salts into alkali metal cations that are absorbed on the negatively charged outer silica and/or phosphate surface, and anions may be accommodated on the positively charged inner aluminol surface. As a result, an ordered 3D structure for free alkali metal ion transportis obtained with a shorter ion transfer pathway and lower ionic coupling, which provides a "highspeed freeway" for alkali metal ion transport. Thus improving the ionic conductivity and the alkali metal ion transference number of the modified solid electrolyte.

Additional advantages conferred by the HNT modified solid electrolyte of the invention can include an enhanced mechanical strength, high electrochemical stability window and thermal stability preventing creep under pressure. In this way, HNT may provide the possibility of realizing sustainable high energy storage at a reduced cost.

It is preferred that the liquid mixture comprises water or moisture in an amount sufficient to initiate the hydrolysis of the alkoxide compound and further polymerization. In some embodiments, the solvent may be water or moisture comprised in the starting materials and/or absorbed from the environment. In some embodiments, the liquid mixture may comprise water and an additional second solvent. Said solvent may aid in the mixing and dispersion of the starting materials as described herein.

Hydrolysis and subsequent polymerization of the alkoxide compound as described herein, results in the formation of a ceramic (inorganic) structure.

The term "alkoxide" as used herein may refer to a metal alkoxide (e.g., alumina alkoxide or zirconium alkoxide) and/or a metalloid alkoxide (e.g., silica alkoxide). The alkoxide as described herein may be represented by the following formula (I) or (II): 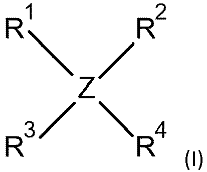 wherein Z is selected from the group consisting of silicon or zirconium; wherein R¹, R², R³, and R⁴ are each independently selected from the group consisting of alkyl or alkoxy, preferably wherein at least three of R¹, R², R³, and R⁴ are alkoxy; 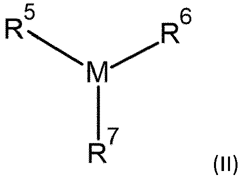 wherein Z is selected from the group consisting of silicon or zirconium; wherein R⁵, R⁶, and R⁷ are alkoxy. It should be noted that for the formation of the porous composite network as described herein, alkoxy groups are reactive functional groups that can participate in the network formation. Alkyl groups typically do not participate in the network formation, resulting in unreacted, dangling chain ends within the polymeric structure.

In preferred embodiments, the alkoxide compound is selected from the group consisting of silica alkoxide, alumina alkoxide, zirconium alkoxide, and mixtures thereof.

In preferred embodiments, silica alkoxide is selected from the group consisting of tetramethyl orthosilicate (TMOS), tetraethyl orthosilicate (TEOS), methyltriethoxysilane (MTES), tetraisopropyl orthosilicate (TIOS), tetrapropyl orthosilicate (TPOS), tetrabutyl orthosilicate (TBOS), substitutions thereof, and/or a combination thereof. It may be appreciated that in principle any alkoxysilane could be comprised in the silica alkoxide in the liquid mixture. The substitution of ethoxy/methoxy groups in alkoxysilane can lead to a change in the morphology/propriety of silica obtained, hence allowing some degree of adjustment in the properties of the composite network. The skilled person understands how this selection can be made. It will be further understood that the herein disclosed method may comprise the addition of one or more silica alkoxides.

In certain embodiments, the network formed after hydrolysis and polymerization of the alkoxide compound comprises porous silica. The porous silica can be, for example, mesoporous silica. The porous silica may have a porosity in the range of 25% to 90%. The porous silica can have a plurality of pores interconnected mutually. The plurality of pores can also be referred to as continuous pores. Incidentally, the plurality of pores may include an isolated pore. The porous composite matrix is functionalised with an electrolyte as will be discussed later, which may at least partially fill the interior of the plurality of pores, or may completely fill the interior of the plurality of pores. The diameter of each pore of the porous silica can be, for example, in the range of 2 nm to 100 nm.

In preferred embodiments, alumina alkoxide is selected from the group consisting of aluminium trimethoxide, aluminium triethoxide, aluminium triisopropoxide, aluminium tributoxide, substitutions thereof, and/or a combination thereof. It may be appreciated that in principle any alkoxy aluminium could be comprised in the alumina alkoxide in the liquid mixture. The substitution of ethoxy/methoxy groups in alkoxy aluminium can lead to a change in the morphology/propriety of aluminium.

m oxide obtained, hence allowing some degree of adjustment in the properties of the composite network. The skilled person understands how this selection can be made. It will be further understood that the herein disclosed method may comprise the addition of one or more alumina alkoxides.

In preferred embodiments, zirconium alkoxide is selected from the group consisting of zirconium tetramethoxide, zirconium tetraethoxide, zirconium tetraisopropoxide, zirconium tetrabutoxide, substitutions thereof, and/or a combination thereof. It may be appreciated that in principle any alkoxy zirconium could be comprised in the alumina alkoxide in the liquid mixture. The substitution of ethoxy/methoxy groups in alkoxy zirconium can lead to a change in the morphology/propriety of zirconium oxide obtained, hence allowing some degree of adjustment in the properties of the composite network. The skilled person understands how this selection can be made. It will be further understood that the herein disclosed method may comprise the addition of one or more zirconium alkoxides.

Advantageously, the method as disclosed herein provides that a polyether compound is integrated in the ceramic matrix formed by hydrolysis and subsequent polymerization of the alkoxide compound. The term "polyether compound" as used herein refers to a substance or compound comprising a macromolecule comprising of a polyether polymer backbone and two end groups. Hence, and in preferred embodiments, the mixing of the alkoxide compound and the polyether compound involves covalently bonding said polyether compound to the (hydrolyzed) alkoxide compound through one or more (hydrolyzed) end group of the polyether compound.

The herein disclosed network or matrix can, therefore, be considered as an inorganic-organic hybrid network comprising inorganic segments (i.e., resulting from the alkoxide compound) and organic segments (i.e., resulting from the polyether compound) that may be comprised in the backbone and/or sidechains of the cross-linked polymeric structure. As a result, the sol-gel method as described herein can be identified as an "in-situ" method for functionalizing the inorganic (ceramic) network structure with organic polymer chains. In contrast, sol-gel methods where an inorganic (ceramic) network, for example silica, is formed first and organic polymer chains, for example polyether polymers, are grafted or reacted onto the surface of the formed silica in a subsequent step, typically results in a more brittle solid electrolyte by comparison.

In this way, a combination of a functionalised polymer with the inorganic matrix is obtained that can provide flexibility and reduce the brittleness that is specific to pure inorganic ceramics. This combination could help prevent stress cracking during the curing process allowing the possibility of coating on substrates of large areas.

Also, the presence of polyether chains in the network structure of the solid electrolyte can lead to strong dissociation of alkali metal salts due to complexation of the alkali metal cations with the ether oxygens. Hence, allowing and/or promoting alkali metal ions to diffuse throughout the solid electrolyte, which improve the ion conductivity of the solid electrolyte so that it is suitable for manufacturing of a high energy solid-state battery, as described later.

In preferred embodiments, the polyether polymer backbone is selected from the group consisting of polyethylene glycol, polypropylene glycol, polytetrahydrofuran, and copolymers and/or mixtures thereof. Contrary to what would be expected from the prior art, the present method is not limited to a particular polyether composition and/or morphology to avoid (partial) crystallization and/or agglomeration of the polyether phase, which may impact the ionic conductivity of the solid electrolyte. In particular, the present method may advantageously provide that the inorganic filler is well dispersed and positioned in between the polymer chains of the network, which may reduce or avoid partial crystallization and/or agglomeration of the polyether phase. It was found that the disordered, more amorphous structure allows for a more facile ion movement, which leads to a higher ionic conductivity.

Preferably, said polyether compound comprises two end groups of which at least one functional end group is selected from the group consisting of alkoxysilane, alkoxy aluminium, alkoxy zirconium, and combinations thereof.

The terms "functional end group", "reactive end group", and "terminal reactive group" as used herein refers to a substituent or moiety that is positioned at an extremity of a macromolecule or oligomer molecule (e.g., a polymer precursor compound). Said substituent or moiety is capable of entering into further polymerization or other reactions. A polymer functionalized with at least one reactive group is therefore suitable for reaction with a given compound (e.g., an alkoxide compound, preferably a hydrolyzed alkoxide compound), bearing at least one complementary reactive functional group.

The person skilled in the art understands that the selection of the functional end group is advantageously adapted to match the alkoxide compound for initiating polymerization. For example, the polymer precursor compound can include alkoxysilane as at least one functional end group when the alkoxide compound comprises silica alkoxide, alkoxy aluminum as at least one functional end group when the alkoxide compound comprises alumina alkoxide, and/or alkoxy zirconium as at least one functional end group when the metal comprises zirconia alkoxide.

In preferred embodiments, silica alkoxide is reacted with a polyether compound comprising two alkoxysilane end groups; alumina alkoxide is reacted with a polymer precursor compound comprising two alkoxy aluminium end groups; and/or zirconium alkoxide is reacted with a polymer precursor compound comprising two alkoxy zirconium end groups.

In certain embodiments, the polyether compound may comprise one and/or two reactive functional end groups.

In preferred embodiments, the polyether compound comprises one reactive functional end group selected from the group consisting of alkoxysilane, alkoxy aluminium, alkoxy zirconium, and combinations thereof; and one non-reactive alkyl end group, preferably wherein the polyether compound has a number of repeating units n ranging from 5 to 2000, or from 6 to 1300, more preferably from 6 to 500, more preferably from 6 to 100, more preferably still from 6 to 50, more preferably still from 6 to 9.

In preferred embodiments, the polyether compound comprises two reactive functional end groups selected from the group consisting of alkoxysilane, alkoxy aluminium, alkoxy zirconium, and combinations thereof; preferably wherein the polyether compound has a number of repeating units n ranging from 5 to 15000, or from 6 to 13000, preferably from 6 to 10000, more preferably from 6 to 5000, more preferably still from 6 to 1000, more preferably still from 6 to 500, more preferably still from 6 to 150.

In some embodiments, the polyether compound may comprise a combination of two or more polyether polymers comprising a different reactive functional end group. For example, the polyether compound may comprise two or more polyether polymers comprising one functional end group, wherein each functional end group is different. Alternatively or in combination, the polyether compound may comprise two or more polyether polymers comprising two functional end groups, wherein each functional end group is different.

The terms "ionic liquid" (IL) and "ionically conductive compound" are used herein interchangeably and refers to a salt that has a melting temperature of 100 °C or less, such as 60 °C or less, preferably 40 °C or less. It should be understood that the term ionic liquid can also include an ionic liquid mixture comprising one or more ionic liquids or ionically conductive compounds.

As will be discussed later, one or more ionically conductive compounds, such as an ionic liquid but also alternatives, such as sulfolane, N-methylacetamide, tetraethylene glycol dimethyl ether, and the like, could be added to the (sol-gel) precursor solution (i.e., the liquid mixture) in order to improve the ionic conductivity. Liquid additives with low flammability present high dielectric constant and lead to strong dissociation of the metal salts due to the strong interaction between strongly electronegative groups of the liquid additives and ions, thus providing high ionic conductivity for the solid electrolyte.

The term "ionic liquid electrolyte (ILE)" refers to a composite or mixture comprising one or more ionic liquid or ionically conductive compound and one or more metal salt, preferably an alkali metal salt. ILEs as described herein are characterized by a low flammability and high dielectric constant, which ensures strong dissociation of the metal salts leading to a highly conductive solid electrolyte. For example, the solid electrolyte as disclosed herein may comprise 1-ethyl-3-methylimidazolium bis(fluorosulfonyl)imide (EMIFSI) and lithium salt in accordance with a preferred embodiment of the electrolyte. A solid-state alkali metal battery using said solid electrolyte can ensure a long-term cycle life, improved rate capability, and an enhanced low-temperature performance. Nonetheless, other combinations of ILs and metal salts may be considered, as described below.

In some embodiments, the metal salt can comprise Li⁺, Na⁺, Mg²⁺, Ca²⁺, Al³⁺, and/or a combination thereof. Preferably the metal salt is an alkali metal salt and comprises Li⁺ and/or Na⁺, which are industry standard for the manufacturing of a high energy solid-state battery.

In some embodiments the amount of dissolved metal salt may be at least 5 wt.% to at most 35 wt.%, or at least 7.5 wt.% to at most 35 wt.%, or at least 10 wt.% to at most 35 wt.%, or at least 10 wt.% to at most 30 wt.%, preferably at least 10 wt.% to at most 25 wt.%, more preferably at least 10 wt.% to at most 20 wt.% with respect to the total weight of the solid electrolyte. Preferably, the amount of dissolved Li salt in the solid electrolyte may be at least 10 wt.% to at most 20 wt.% with respect to the total weight of the solid electrolyte. The listed amounts are advantageous for the manufacturing of a solid-state battery having improved ionic conduction properties.

In some embodiment the amount of dissolved metal salt concentration may be at least 1 Mol/I to at most 2 Mol/I. Preferably, the amount of dissolved LiTFSI may be at least 1 Mol/I to at most 2 Mol/I. Preferably, embodiment the amount of dissolved Li salt concentration may be at least 1 Mol/I to at most 2 Mol/I. Preferably, the amount of dissolved LiTFSI may be at least 1 Mol/I to at most 2 Mol/I. The listed amounts are advantageous for the manufacturing of a solid-state battery having improved ionic conduction properties.

Alternatively or in combination, the lithium salt may comprise one or more other anions, such as Lithium bis(trifluoromethanesulfonyl)imide (LiFSI), Lithium bis(trifluoromethane)sulfonimide (LiTFSI), Lithium hexafluorophosphate (LiPF₆), Lithium tetrafluoroborate (LiBF₄), Lithium bis(oxalato)borate (LiBOB), Lithium nitrate (LiNO₃), any substitutions known in the art, and/or a combination thereof. Nonetheless, LiTFSI is preferred because it is more chemically stable in an organic solvent. Additionally, a plurality of different metal salts may be used, for example, LiFSI and LiTFSI.

Alternatively or in combination, the sodium salt may comprise one or more other anions, such as Sodium bis(trifluoromethanesulfonyl)imide (NaFSI), Sodium bis(trifluoromethane)sulfonimide (NaTFSI), Sodium hexafluorophosphate (NaPF₆), Sodium tetrafluoroborate (NaBF₄), Sodium bis(oxalato)borate (NaBOB), Sodium nitrate (NaNO₃), any substitutions known in the art, and/or a combination thereof. Nonetheless, NaTFSI is preferred because it is more chemically stable in an organic solvent. Additionally, a plurality of different metal salts may be used, for example, NaFSI and NaTFSI.

In particular embodiments, the ionically conductive compound is selected from the group consisting of: 1-Ethyl-3-methylimidazolium bis(fluorosulfonyl)imide (EMIFSI), 1-Ethyl-3-methylimidazolium bis(trifluoromethylsulfonyl)imide (EMITFSI), 1-Ethyl-3-methylimidazolium fluorosulfonyl (trifluoromethanesulfonyl)imide (EMIFTFSI), 1-Ethyl-3-methylimidazolium trifluoromethanesulfonate (EMIOTf), Butyltrimethylammonium bis(trifluoromethylsulfonyl)imide (BMATFSI), 1-Ethyl-3-methylimidazolium bis(pentafluoroethylsulfonyl)imide (EMIBeti), 1-Ethyl-3-methylimidazolium dicyanamide (EMIDCA), 1-Ethyl-3-methylimidazolium diethylphosphate (EMIDEP), 1-Butyl-3-methylimidazolium bis(fluorosulfonyl)imide (BMIFSI), 1-Butyl-3-methylimidazolium bis(trifluoromethylsulfonyl)imide (BMITFSI), 1-Butyl-3-methylimidazolium fluorosulfonyl (trifluoromethanesulfonyl)imide (BMIFTFSI) 1-Butyl-3-methylimidazolium trifluoromethanesulfonate (BMIOTf), 1-Butyl-3-methylimidazolium bis(pentafluoroethylsulfonyl)imide (BMIBeti), 1-Butyl-1-methylpyrrolidinium bis(fluorosulfonyl)imide (BMPFSI), 1-Butyl-1-methylpyrrolidinium bis(trifluoromethylsulfonyl)imide (BMPTFSI), 1-Butyl-1-methylpyrrolidinium fluorosulfonyl (trifluoromethanesulfonyl)imide (BMPFTFSI), 1-Butyl-1-methylpyrrolidinium trifluoromethanesulfonate (BMPOTf), 1-Butyl-1-methylpyrrolidinium bis(pentafluoroethylsulfonyl)imide (BMPBeti), 1-Methyl-1-pentylpyrrolidinium bis(trifluoromethanesulfonyl)imide (Pyr15TFSI), 1-Methyl-1-pentylpyrrolidinium fluorosulfonyl (trifluoromethanesulfonyl)imide (Pyr15FTFSI), 1-Methyl-1-pentylpyrrolidinium trifluoromethanesulfonate (Pyr150Tf), 1-Methyl-1-pentylpyrrolidinium bis(pentafluoroethylsulfonyl)imide (Pyr15Beti), triethylsulfonium bis(trifluoromethanesulfonyl)imide (TESTFSI), tetrabutylammonium bis(trifluoromethane)sulfonylimide (TBATFSI), and mixtures thereof.

In some embodiments, the ionically conductive compound is selected from the group consisting of: 1-Ethyl-3-methylimidazolium bis(fluorosulfonyl)imide (EMIFSI), 1-Ethyl-3-methylimidazolium bis(trifluoromethylsulfonyl)imide (EMITFSI), Butyltrimethylammonium bis(trifluoromethylsulfonyl)imide (BMATFSI), 1-Butyl-3-methylimidazolium bis(fluorosulfonyl)imide (BMIFSI), 1-Butyl-3-methylimidazolium bis(trifluoromethylsulfonyl)imide (BMITFSI), 1-Butyl-1-methylpyrrolidinium bis(fluorosulfonyl)imide (BMPFSI), 1-Butyl-1-methylpyrrolidinium bis(trifluoromethylsulfonyl)imide (BMPTFSI), 1-Butyl-1-methylpyrrolidinium fluorosulfonyl (trifluoromethanesulfonyl)imide (BMPFTFSI), 1-Methyl-1-pentylpyrrolidinium bis(trifluoromethanesulfonyl)imide (Pyr15TFSI), triethylsulfonium bis(trifluoromethanesulfonyl)imide (TESTFSI), tetrabutylammonium bis(trifluoromethane)sulfonylimide (TBATFSI), and mixtures thereof.

In some embodiments, the ionically conductive compound is selected from the group consisting of: 1-Ethyl-3-methylimidazolium bis(trifluoromethylsulfonyl)imide (EMITFSI), Butyltrimethylammonium bis(trifluoromethylsulfonyl)imide (BMATFSI), 1-Butyl-3-methylimidazolium bis(fluorosulfonyl)imide (BMIFSI), 1-Butyl-3-methylimidazolium bis(trifluoromethylsulfonyl)imide (BMITFSI), 1-Butyl-1-methylpyrrolidinium bis(fluorosulfonyl)imide (BMPFSI), 1-Methyl-1-pentylpyrrolidinium bis(trifluoromethanesulfonyl)imide (Pyr15TFSI), and mixtures thereof.

In some embodiments the amount of ionically conductive compound in the solid electrolyte may be at least 1 wt.% to at most 50 wt.%, or at least 1 wt.% to at most 40 wt.%, or at least 1 wt.% to at most 35 wt.%, or at least 1 wt.% to at most 30 wt.%, preferably at least 5 wt.% to at most 30 wt.% with respect to the total weight of the solid electrolyte. In some embodiments, a molar ratio of the ionic liquid to the composite network is at least 0.5 and at most 3 (ionic liquid to alkoxide compound). The listed amounts are advantageous for the manufacturing of a solid-state battery having improved ionic conduction properties.

Turning back now to the sol-gel method, a second step is causing the gelation of the liquid mixture to form a gel mixture. The term "gelation" or "gel transition" as used herein interchangeably has a well-known meaning within the art. In particular, hydrolysis and/or alcoholysis products comprised in the liquid mixture may polymerize to form branched copolymers, said branched copolymers may then form covalent links between the chains, which lead to progressively larger macromolecules. As the linking continues, larger branched copolymers are formed and at a certain extent of the reaction (i.e., the sol-gel process), a single macroscopic molecule (i.e., polymer network) is formed. At that point in the reaction (i.e., the gel point), the system loses fluidity and significantly increases in viscosity, resulting in a gel. The gel or network can no longer dissolve in the solvent or liquid phase, but can swell in it.

Subsequently, the wet gel can be dried or aged to form a dry organic-inorganic network, which is preferably free of solvent. When an ILE is embedded in said three-dimensional organic-inorganic network, a solid electrolyte is obtained. When an inorganic filler and a dispersing agent are embedded in said three-dimensional organic-inorganic network, a modified solid electrolyte is obtained.

It should be noted that partial hydrolysis of the silicon precursor(s) may be initiated immediately after formation of the liquid mixture. However, in the absence of a catalyst or initiator hydrolysis and/or alcoholysis of the alkoxide compound is typically slow and inefficient. In the method as disclosed herein, significant hydrolysis of at least a portion of the alkoxide compound may be initiated, resulting in the formation of reactive alkoxy species, such as silanol groups. Subsequently, said reactive silanol groups may condense to form a cross-linked silica network.

The term "liquid mixture" is, therefore, used to identify a liquid medium (e.g., a solution), which can gradually evolve to a gel-like network through the herein described curing processes.

In particular, the silica alkoxide as disclosed herein may comprise at least one alkoxysilane functional group (i.e., -SiOR), which undergoes hydrolysis to a silanol functional group (i.e., -SiOH). The hydrolyzed silicon precursor comprising silanol functional groups can subsequently participate in polycondensation reactions to form discrete colloid particles to continuous chain-like polymer networks.

In particular, the alumina alkoxide as disclosed herein may comprise at least one alkoxy aluminium functional group (i.e., -AIOR), which undergoes hydrolysis to an aluminium hydroxide functional group (i.e., -AIOH). The hydrolyzed alumina alkoxide comprising aluminium hydroxide functional groups can subsequently participate in polycondensation reactions to form discrete colloid particles to continuous chain-like polymer networks.

In particular, the zirconium alkoxide as disclosed herein may comprise at least one alkoxy zirconium functional group (i.e., -ZrOR), which undergoes hydrolysis to a zirconium hydroxide functional group (i.e., -ZrOH). The hydrolyzed zirconium alkoxide comprising zirconium hydroxide functional groups can subsequently participate in polycondensation reactions to form discrete colloid particles to continuous chain-like polymer networks.

In some embodiments, the liquid mixture may further comprise a catalyst and/or polymerization precursor. Suitable catalysts comprise alkyl carboxylic acid, aryl carboxylic acid, cycloalkyl carboxylic acid, HF, HCl, HBr, HI, metal ions such as Na⁺, Mg²⁺, and K⁺, and wherein alkyl, aryl, and cycloalkyl have the meaning as defined herein above. Suitable polymerization precursors comprise a polymerizable functional group such as an alcohol, a polyolefin, an acrylate, a methacrylate, an acrylamide, and a methacrylamide. It should be understood that other catalysts and/or polymerization precursors may be used. The additional catalyst has the effect that the resulting curing mixture can gel faster. The additional polymerization precursor can be advantageously selected so as to self-polymerize and/or react with terminal functional groups from the organosilicon compound in order to stimulate an improved mechanical stability of the solid electrolyte composition.

In some embodiments, gelation can be performed by storage in a storage room. For example, a container containing the liquid mixture can be sealed and stored at room temperature (25 °C, ambient temperature) for several days, during which the liquid mixture turns into a wet gel mixture.

The time required for the gelation can be controlled by the amount of water added, amount of the solvent and/or organic solvent added, and storage temperature. In some embodiments, the gelation can be performed at a temperature of at most 70 °C to at least 30 °C, preferably at most 60 °C to at least 40 °C, more preferably at most 55 °C to at least 45 °C, more preferably still about 50 °C. The listed temperatures can decrease the time needed for gelation to occur, although lower temperatures can be considered still. In some particular embodiments, the method as disclosed herein provides that the formation of the gel mixture can occur in at least 1 minute and at most 300 minutes, or at least 5 minutes and at most 300 minutes, or at least 5 minutes and at most 240 minutes, or at least 5 minutes and at most 120 minutes, preferably in at least 5 minutes and at most 60 minutes.

After gelation, the solid electrolyte composition can be formed by drying of the wet gel mixture. The drying can be performed by a classic drying and/or ageing process. For example, the gel mixture can be dried, for example, using a vacuum dryer under the conditions of a pressure of 0.01 to 100 Pa and a temperature of 15 to 120 °C. Optionally, a pre-drying process may be carried out before the vacuum drying step to slowly remove the solvent throughout the final curing stages. This additional step may avoid uncontrolled changes in the textural properties of the gel, and prevent the formations of cracks in the solid pellets which can be caused by fast solvent removal. In the pre-drying process, the gel mixture is kept for about 24 h under dry room conditions (e.g., between 20 and 25 °C when the dew point ranges from - 50 to -42 °C). Most of the water from the solvent, and optionally the organic solvent, contained in the gel mixture can be evaporated by the pre-drying process.

A further aspect of the present invention relates to an inorganic filler modified solid electrolyte characterized by comprising the following components:
- a porous composite network obtained or obtainable by a reaction of an alkoxide compound and a polyether compound;
- an electrolyte comprising an ionically conductive compound in which a metal salt is dissolved;
- inorganic filler; and
- a dispersing agent.

Another aspect of the present invention relates to a clay mineral modified solid electrolyte characterized by comprising the following components:
- a porous composite network obtained or obtainable by a reaction of an alkoxide compound and a polyether compound;
- an electrolyte comprising an ionically conductive compound in which a metal salt, preferably an alkali metal salt, is dissolved;
- clay mineral particles; and
- a phosphate-based dispersing agent;

preferably, wherein the alkoxide compound is selected from the group consisting of silica alkoxide, alumina alkoxide, zirconium alkoxide, and mixtures thereof; and

preferably, wherein the polyether compound comprises two end groups of which at least one end group is a functional end group selected from the group consisting of alkoxysilane, alkoxy aluminium, alkoxy zirconium, and combinations thereof.

It should be understood that the electrolyte, inorganic filler, and dispersing agent are at least partially contained or incorporated within the porous composite network as described herein. In other words, these components are situated within the porous composite network to some extent, but not necessarily entirely, such that an additional amount may be situated outside of it or only partially embedded within it, such as on top or below the porous composite network, thereby forming a layer for example. In other embodiments, the electrolyte, inorganic filler, and dispersing agent are fully contained or incorporated within the porous composite network, thereby being limited to the porous composite network.

In preferred embodiments, the inorganic filler modified solid electrolyte as disclosed herein is obtainable or obtained by means of the method as disclosed herein. As described above, the clay mineral modified solid electrolyte obtained by the method of the present invention can demonstrate a suitable ionic conductivity for an application in alkali metal batteries. In some embodiments, the modified solid electrolyte can have an ionic conductivity between 0.01 and 20.0 mS cm⁻¹, preferably between 0.1 and 10.0 mS cm⁻¹, or between 0.2 and 10.0 mS cm⁻¹, more preferably between 0.3 and 10.0 mS cm⁻¹, or between 0.4 and 10.0 mS cm⁻¹, or between 0.5 and 10.0 mS cm⁻¹, or more preferably still between 1.0 and 10.0 mS cm⁻¹, or between 2.5 and 10.0 mS cm⁻¹, or between 3.0 and 10.0 mS cm⁻¹, or between 5.0 and 10.0 mS cm⁻¹ as measured by electrochemical impedance spectroscopy (EIS) at 20 °C. The ionic conductivity can be calculated using methods of the art suitable for analysis of an impedance plot.

In certain embodiments, the amount of clay mineral particles is at least 0.5 wt.% to at most 20.0 wt.%, or at least 0.5 wt.% to at most 15.0 wt.%, or at least 0.5 wt.% to at most 10.0 wt.%, or at least 1.0 to at most 10.0 wt.%, based on the total weight of the clay mineral modified solid electrolyte.

In certain embodiments, the amount of phosphate-based dispersing agent is at least 0.1 wt.% to at most 50.0 wt.%, or at least 0.1 wt.% to at most 45.0 wt.%, or at least 0.1 wt.% to at most 40.0 wt.%, or at least 0.1 wt.% to at most 35.0 wt.%, or at least 0.1 wt.% to at most 30.0 wt.%, or at least 0.1 wt.% to at most 20.0 wt.%, or at least 0.1 wt.% to at most 10.0 wt.%, based on the weight of the clay mineral particles.

It has been found that the aforementioned amounts provide an optimal balance between dispersibility of the clay mineral particles and mechanical stability and ionic conductivity of the modified solid electrolyte. Advantageously, the inorganic filler modified solid electrolyte, and preferably the clay mineral modified electrolyte as described herein is characterized by a homogeneous dispersion of the inorganic filler within the modified solid electrolyte. In some embodiments, the inorganic filler may be particles or tubes with a diameter or size of at most 50.0 µm, or at most 20.0 µm, or at most 10.0 µm, preferably at most 5.0 µm. In some embodiments, the modified solid electrolyte may have a thermal stability of at least 300 °C, or at least 275 °C, or preferably at least 250 °C, or at least 225 °C, or at least 200 °C, or at least 150 °C as measured by dynamic thermogravimetric analysis conducted under nitrogen at a heating rate of 10 °C.min⁻¹ from 25 °C to 800 °C. The thermal stability can be determined from the temperature at 5% weight loss.

In some embodiments, the modified solid electrolyte may have a density of between 0.1 g/cm³ and 20.0 g/cm³, or between 0.5 g/cm³ and 20.0 g/cm³, preferably between 0.5 g/cm³ and 10.0 g/cm³, or between 0.5 g/cm³ and 7.5 g/cm³, or between 0.5 g/cm³ and 5.0 g/cm³, more preferably between 0.5 g/cm³ and 3.0 g/cm³. The density of the modified solid electrolyte can be determined by measuring the weight and volume of the modified solid electrolyte.

In some embodiments, the modified solid electrolyte may have an Electrochemical Stability Window (ESW) value of between 2.0 and 15.0 V, or between 2.0 and 12.5 V, or between 2.0 and 10.0 V, preferably between 2.0 and 7.5 V when used to make a solid-state battery. The voltage range may be expressed as V vs Li⁺/Li. The term "Electrochemical Stability Window (ESW)" as used herein has a well-known meaning within the art and is used to express the electrode electric potential range between which a substance is neither oxidized or reduced. The ESW can be calculated by subtracting the reduction potential (cathodic limit) from the oxidation potential (anodic limit). Outside this range, the modified solid electrolyte may react with an electrode interface.

The modified solid electrolyte as disclosed herein is not limited to a particular shape. In particular embodiments, the inorganic filler modified solid electrolyte or clay mineral modified solid electrolyte may be a self-standing film. A "self-standing film" as described herein refers to a modified solid electrolyte film that is capable of maintaining its structural integrity and functionality without the need for additional support or substrate. In other words, it can stand alone and be handled independently without requiring backing materials or scaffolding.

In certain embodiment the self-standing film may have a thickness below 250 µm, or below 200 µm, or below 150 µm, or below 100 µm, or below 50 µm, preferably below 10 µm, for example 5 µm.

In particular embodiments, the inorganic filler modified solid electrolyte or clay mineral modified solid electrolyte may be a membrane-supported film. A "membrane-supported film" as described herein refers to a (thin) layer of modified solid electrolyte material that is deposited or coated onto a porous membrane substrate. Unlike self-standing films, which can maintain their structural integrity independently, membrane-supported films rely on the underlying membrane for mechanical support. In other words, said membrane may serve as a scaffold or substrate onto which the solid electrolyte material is applied or integrated. Suitable non-limiting examples of a membrane include polymers and ceramics.

Coating of the porous membrane substrate with the modified solid electrolyte material may substantially fill the pores of the membrane with said modified solid electrolyte. This has the advantage that both the ionic conductivity and mechanical stability of the membrane-supported film may be improved.

In certain embodiment the layer of coated solid electrolyte material may have a thickness below 250 µm, or below 200 µm, or below 100 µm, or below 150 µm, or below 50 µm, preferably below 10 µm, for example 5 µm.

In another aspect, the present invention relates to an electrode comprising: an inorganic filler modified solid electrolyte according to the above embodiments, preferably a clay mineral modified solid electrolyte, or prepared according to any of the above embodiments, and an electrode active material.

In some embodiments, the clay mineral modified solid electrolyte may cover and/or coat a surface of the electrode as a covering/coating layer, as will be described below. Preferably, the the clay mineral modified solid electrolyte may impregnate the porosity of the electrode as described below.

The electrode can be, for example, produced by applying a slurry containing active material particles, a binder and conductive agent particles onto a current collector. The slurry can be applied by using a coating technique known in the art, for example, drop casting, blade coating, slot die coating, spray coating, and so on. The slurry can be dried to obtain an electrode film on top of the current collector.

Subsequently, the electrode can be impregnated, for example, by applying a clay mineral modified solid electrolyte precursor solution, and/or or pre-gelated electrolyte solution onto said electrode. In this way, a composite electrode comprising the modified solid electrolyte can be obtained, with or without an overfill. The impregnation with a clay mineral modified solid electrolyte precursor and/or pre-gelated electrolyte solution can be performed by using a coating technique known in the art, for example, drop casting, blade coating, slot die coating, spray coating, dip coating and the like. The amount of clay mineral modified solid electrolyte precursor and/or pre-gelated electrolyte solution can be adapted, for example, to form or not form an overfill on top of the electrode. The skilled person understands that the exemplary embodiment can be adapted based on the relevant assembly process strategy.

It may be, moreover, appreciated that, because of the improved properties of the herein disclosed modified solid electrolyte obtained by the method according to any of the above embodiments, there exists the possibility to adapt the production process, for example, to produce a self-standing film, which was previously difficult with other types of solid electrolytes, such as pure porous silica.

Accordingly, in some embodiments the electrode can be impregnated to form a composite electrode by pressing the electrode onto a self-standing clay mineral modified solid electrolyte film and/or pellet produced in accordance with any of the above methods, in the cell. This latter approach does not involve the abovementioned coating techniques known in the art. Nonetheless, the modified solid electrolyte can also be produced using classic production techniques, as described above, allowing for great adaptability based on the relevant assembly process strategy.

As described above, the clay mineral modified solid electrolyte obtained by the method of the present invention can demonstrate a suitable ionic conductivity for an application in alkali metal batteries; therefore, an electrode comprising said clay mineral modified solid electrolyte can demonstrate improved ionic conduction properties also. Similarly, the electrode can have improved mechanical properties due to the improved elasticity of the clay mineral modified solid electrolyte. It is understood that any of the above embodiments relating to the inorganic filler modified solid electrolyte, and preferably the clay mineral modified solid electrolyte, form embodiments of the electrode.

The term "covering" or "coating" is used to refer to a point or position where the electrode comes in contact with the modified solid electrolyte according to any of the above embodiments and results in the formation of a layer that covers and/or coats the electrode active material, more specifically on one or more surfaces thereof. Advantageously, the layer completely covers at least one surface of the electrode. In some embodiments, the clay mineral modified solid electrolyte may be a uniform covering/coating layer on the electrode active material. The term "uniform" as used herein referring to the composite layer means that said layer does not contain segregated areas of amorphous and/or crystalline content that can be easily discerned using the analytical techniques described herein.

In some embodiments, the clay mineral modified solid electrolyte may advantageously be a homogeneous covering/coating layer on the electrode active material. The term "homogeneous" as used herein referring to the composite layer means that the components of said layer, more specifically the ILE, the inorganic filler (e.g., clay mineral particles), the dispersing agent (e.g., phosphate-based dispersing agent) and the hybrid organic-inorganic silica network that incorporate silica, alumina, and/or zirconia and polyether polymers in accordance with any of the herein described embodiments, are homogeneously mixed and said layer and/or a surface thereof therefore does not contain areas wherein the components can be easily discerned using the analytical techniques described herein.

In some embodiments the covering layer may have a dried thickness, before compression, lower than about 200 µm, preferably lower than about 150 µm; more preferably lower than about 100 µm; more preferably still lower than about 60 µm, for example 50 µm, 40 µm or 30 µm. In preferred embodiments, the covering layer may have a dried thickness of below 10 µm.

In some embodiments the thickness of the covering layer, preferably as excess overfill modified solid electrolyte, may be between 0 µm and 1000 µm, preferably between 0 µm and 300 µm, more preferably between 0 µm and 100 µm, more preferably still between 0 µm and 30 µm. The thickness of the covering layer can impact the electrical properties of the battery and the skilled person understands that the thickness of the herein described exemplary embodiments can be adapted based on the relevant assembly process strategy.

As used herein, a "thick" film refers to an electrolyte film that, after drying has a layer thickness greater than about 50 µm, and a "thin" film refers to an electrolyte film that, after drying has a layer thickness lower than about 50 µm. Advantageously, the modified solid electrolyte thickness, after compression, is produced to be as thin as possible while maintaining its mechanical functionality (no cracking) to separate positive and negative electrodes from each other such that the maximum Wh/L can be realised at device and stack level. Nonetheless, it should be appreciated that the herein disclosed composite electrolyte has the advantage of allowing the production of thick/thin films of varying thickness and diameter due to its improved mechanical properties as discussed earlier, making the fabrication of large and/or thick self-standing films possible, or obtaining a crack-free film of few µm (for example, in a range of >20 µm & < 150 µm on top of the electrode).

In preferred embodiments, the produced modified solid electrolyte film may have an average thickness of between 100 µm and 1000 µm, or between 100 µm and 900 µm, or between 100 µm and 800 µm, or between 100 µm and 700 µm, preferably between 100 µm and 600 µm, or between 200 µm and 600 µm, or between 300 µm and 600 µm, or between 400 µm and 600 µm, more preferably between 400 µm and 500 µm, for example about 450 µm. Alternatively or in combination with any of the above embodiments, the clay mineral modified solid electrolyte may be a self-standing film. Preferably the clay mineral modified solid electrolyte is a homogeneous/uniform self-standing film. Due to the improved mechanical properties of the modified solid electrolyte, it is possible to cast a film that can be placed onto an electrode, preferably, between two opposite electrodes. The self-standing film can be produced by being deposited on a substrate that is removed after solidification of the modified solid electrolyte.

In some embodiments an electrode active material used in the electrode can be a positive electrode active material. Examples of the positive electrode active material may include a lithium-containing transition metal oxide, vanadium oxide, chromium oxide, and lithium-containing transition metal sulfide. Examples of the lithium-containing transition metal oxide include LiCoO₂, LiNiO₂, LiMnO₂, LiMn₂O₄, LiNiCoMnOj (referred as NMC family with various compositions NMXxyz, where x, y z, refers to the relative amounts of Ni, Mn and Co present in the cathode active material, for example, NMC 111 corresponding to a material composed of Ni 33.33%; Mn 33.3% and Co3.33%; or NMC 532, NMC 622, NMC 721, NMC 811, NMC 90.50.5 and any other composition of NMC or combination thereof), LiNiCoO₂, LiCoMnO₂, LiNiMnO₂, LiNiCoMnO₄, LiMnNiO₄, LiMnCoO₄, LiNiCoAlO₂, LiNiPO₄, LiCoPO₄, LiMnPO₄, LiFePO₄, LiMnFePO₄, Li₂NiSiO₄, Li₂CoSiO₄, Li₂MnSiO₄, Li₂FeSiO₄, LiNiBO₃, LiCoBOa, LiMnBO₃, and LiFeBO₃. Examples of the lithium-containing transition metal sulfide include LiTiS₂, Li₂TiS₃, and Li₃NbS₄. One positive electrode active material or two or more positive electrode active materials selected from these positive electrode active materials can be used. For instance, a combination of LiFePO₄ and any NMC composition as described above, or LiFeMnPO₄ and any NMC composition as described above, may be used.

In some embodiments an electrode active material used in the electrode can be a negative electrode active material. Examples of the negative electrode active material may include a metal, semimetal, oxide, nitride, and carbon. Examples of the metal and semimetal include lithium, silicon, amorphous silicon, aluminium, silver, tin, antimony, and their alloys. Examples of the oxide can include Li₄Ti₅O₁₂, Li₂SrTi₆O₁₄, TiO₂, Nb₂O₅, SnO₂, Ta₂O₅, WO₂, WO₃, Fe₂O₃, CoO, MoO₂, SiO, SnBPO₆, and their mixtures. Examples of the nitride can include LiCoN, Li₃FeN₂, Li₇MnN₄, and their mixtures. Examples of the carbon may include graphite, graphene, hard carbon, carbon nanotube, and their mixtures. One negative electrode active material or two or more negative electrode active materials selected from these negative electrode active materials can be used.

In some embodiments, the electrode may comprise a binder. The binder may fix particles of the electrode active material to each other. When the particles of the electrode active material are fixed to each other, occurrence of a gap due to expansion and shrinkage of the particles of the electrode active material is reduced. This reduces a decrease in the discharged capacity of a battery including the electrode. The binder may, for example, comprise carboxymethyl cellulose (CMC) and styrene-butadiene rubber (SBR), polyvinylidene fluoride (PVDF) and the like.

In another aspect of the invention, the present invention relates to an electrochemical energy storage device, such as a battery or cell, comprising a positive electrode, a negative electrode; and the inorganic filler modified solid electrolyte, preferably the clay mineral modified solid electrolyte, as disclosed herein, or obtained or obtainable by means of the method as disclosed herein.

It is understood that an electrochemical energy storage device may comprise various combinations of electrode, for example, a plurality of negative and positive electrodes that are advantageously stacked on top of each other. Techniques for producing a power storage device from a (modified) solid electrolyte are known in the art.

As used herein, an "electrochemical energy storage device" refers to a device capable of either generating electrical energy from chemical reactions or using electrical energy to cause chemical reactions. The technology of the present invention can be regarded as general-purpose technology in the sense that it can be readily adapted for a variety of different electrochemical energy storage device, including for example, solid-state electrochemistry which may be implemented in various battery applications, such as automotive, aviation, marine, space, but not limited thereto.

Advantageously, the electrochemical energy storage device comprising the solid electrolyte composition as disclosed herein may provide increased thermal stability for longer lifetime of e.g., a battery, increased voltage stability, and reduced failure of said device.

In some embodiments, the electrochemical energy storage device may comprise the modified solid electrolyte as a self-standing film that is arranged on at least one electrode, preferably, between two opposite electrodes.

In preferred embodiments, the inorganic filler modified solid electrolyte, preferably the clay mineral modified solid electrolyte, forms a covering layer on at least the positive electrode of the electrochemical energy storage device.

As described above, because the modified solid electrolyte of the present invention can demonstrate high ionic conductivity; therefore, a power storage device comprising an electrode with said solid electrolyte composition can demonstrate improved ionic conduction properties also. Similarly, the power storage device can have improved mechanical properties due to the improved flexibility of the modified solid electrolyte comprised in the electrode. It is understood that any of the above embodiments of the modified solid electrolyte form embodiments of the power storage device.

In particular embodiments, the present invention provides that the energy storage device is an alkali metal battery, preferably a lithium and/or a sodium battery.

A further aspect of the invention relates to the use of a phosphate-based dispersing agent for the homogeneous dispersion of an inorganic filler, preferably clay mineral particles, into a solid electrolyte.

In preferred embodiments, the phosphate-based dispersing agent is used in an inorganic filler modified solid electrolyte, preferably a clay mineral modified solid electrolyte, as described herein, or obtained or obtainable by means of the method as described herein.

Homogeneous dispersion or distribution of an inorganic filler by action of the phosphate-based dispersing agent has the advantage that the mechanical integrity, chemical stability, and thermal resistance of the resulting (modified) solid electrolyte can be improved without compromising ionic conductivity. Without wishing to be bound by theory, it has been found that the phosphate-based dispersing agent may modify the surface of the inorganic filler, preferably through non-covalent or reversible interactions with the surface, which reduces phase separation and agglomeration of the inorganic filler.

Preferably, the phosphate-based dispersing agent is added during the curing process. Alternatively, or in combination, the phosphate-based dispersing agent may be added after the curing process by, for example, swelling the phosphate-based dispersing agent into the cured network. Hence, and in some embodiments, a solid electrolyte comprising one or more inorganic filler may be swollen in a solution comprising a solvent and one or more phosphate-based dispersing agent as disclosed herein. Subsequently, the swollen network may be dried to remove the solvent, while leaving the phosphate-based dispersing agent behind in the dried network.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, the terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps. The singular forms "a", "an", and "the" include both singular and plural referents unless the context clearly dictates otherwise.

Objects described herein as being "connected" or "coupled" reflect a functional relationship between the described objects, that is, the terms indicate the described objects must be connected in a way to perform a designated function which may include a direct or indirect connection in an electrical or nonelectrical (i.e. physical) manner, as appropriate for the context in which the term is used.

The recitation of numerical ranges by endpoints includes all integer numbers and, where appropriate, fractions subsumed within that range (e.g., 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g., from 1.0 to 5.0 includes both 1.0 and 5.0). Any numerical range recited herein is intended to include all sub-ranges subsumed therein. Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical value or range endpoint by providing that a given value may be "a little above" or "a little below" said value or endpoint, depending on the specific context. Unless otherwise stated, use of the term "about" in accordance with a specific number or numerical range should also be understood to provide support for such numerical terms or range without the term "about". For example, the recitation of "about 30" should be construed as not only providing support for values a little above and a little below 30, but also for the actual numerical value of 30 as well.

Reference in this specification may be made to devices, structures, systems, or methods that provide "improved" performance (e.g. increased or decreased results, depending on the context). It is to be understood that unless otherwise stated, such "improvement" is a measure of a benefit obtained based on a comparison to devices, structures, systems or methods in the prior art. Furthermore, it is to be understood that the degree of improved performance may vary between disclosed embodiments and that no equality or consistency in the amount, degree, or realization of improved performance is to be assumed as universally applicable.

Reference throughout this specification to substituents is meant to indicate that one or more hydrogen atoms on the atom indicated in the expression using "substituted" is replaced with a selection from an indicated group as detailed below, provided that the indicated atom's normal valence is not exceeded, and that the substitution results in a chemically stable compound, i.e., a compound that is sufficiently robust to survive isolation from a reaction mixture.

### EXAMPLES

Examples of an implementation of the present technology as described herein is given hereinbelow. The provision of examples is meant to aid the reader in understanding the technological concepts more easily, but it is not meant to identify the most important or essential features thereof, nor is it meant to limit the scope of the present invention.

To demonstrate the improved mechanical properties of the herein disclosed solid electrolyte, a number of solid electrolyte films are produced using drop casting of an electrolyte solution prepared through a sol-gel process based on the following process parameters.

### Example 1

First, a liquid mixture was prepared by mixing 2.752 g of tetraethyl orthosilicate (TEOS), 5 g of 1-Ethyl-3-methylimidazolium bis(fluorosulfonyl)imide (EMIFSI), 1.55 g of lithium bis(trifluoromethanesulfonyl)imide (LiTFSI), 5.427 g of propylene glycol methyl ether (PGME), and 2.949 g of water in a glass bottle container equipped with a magnetic stirring bar placed in a glovebox. The molar ratio of EMIFSI:TEOS: was 1.3. Once a homogeneous, clear solution was obtained, the container was sealed and stored at 50 °C for 13 hours. Then, a solution comprising 0.11 g of halloysite nanotubes (HNT), 0.011 g of sodium polyphosphate, and 2 g of water solvent were added to the mixture under continuous stirring. The precursor solution was subsequently drop-cast in an aluminium CR2025 coin cell cap used as a mold. Around 0.3 g of the sol was used per mold. The drop cast sol was kept at ambient temperature (40-60% relative humidity and 20.5-22.5°C) for 12 hours to obtain a gel mixture.

Subsequently, the wet samples were demolded and dried at 60 °C under vacuum (< 10⁻² mbar) for 3 days to obtain a clay modified solid electrolyte in the form of solid pellets. The self-standing solid pellets of 100-200 µm thickness were kept in a dry room atmosphere prior to use. The resulting clay modified solid electrolyte comprised 1.0 wt.% of HNT (with wt.% based on the total weight of the clay modified solid electrolyte) and 10.0 wt.% of dispersing agent (with wt.% based on the weight of HNT).

### Example 2

Example 2 illustrates the impact of producing a clay modified solid electrolyte using a different wt.% of halloysite nanotubes with a fixed amount of sodium polyphosphate (10 wt.%, with wt.% based on the weight of the halloysite nanotubes) by using the synthesis protocol described in Example 1.

The procedure of Example 1 was repeated, resulting in clay modified solid electrolyte 1.

The procedure of Example 1 was repeated, with the difference that 0.13 g of halloysite nanotubes, 0.013 g of sodium polyphosphate, and 2.949 g of water solvent were added to the mixture under continuous stirring, resulting in clay modified solid electrolyte 2.

The procedure of Example 1 was repeated, with the difference that 0.21 g of halloysite nanotubes, 0.021 g of sodium polyphosphate, and 2.949 g of water solvent were added to the mixture under continuous stirring, resulting in clay modified solid electrolyte 3.

The procedure of Example 1 was repeated with the difference that 0.315 g of halloysite nanotubes, 0.0315 g of sodium polyphosphate, and 2.949 g of water solvent were added to the mixture under continuous stirring, resulting in clay modified solid electrolyte 4.

The procedure of Example 1 was repeated with the difference that 0.421 g of halloysite nanotubes, 0.0421 g of sodium polyphosphate, and 2.949 g of water solvent were added to the mixture under continuous stirring, resulting in clay modified solid electrolyte 5.

The procedure of Example 1 was repeated with the difference that 0.535 g of halloysite nanotubes, 0.0535 g of sodium polyphosphate, and 2.949 g of water solvent were added to the mixture under continuous stirring, resulting in clay modified solid electrolyte 6.

The procedure of Example 1 was repeated with the difference that 0.765 g of halloysite nanotubes, 0.0765 g of sodium polyphosphate, and 2.949 g of water solvent were added to the mixture under continuous stirring, resulting in clay modified solid electrolyte 7.

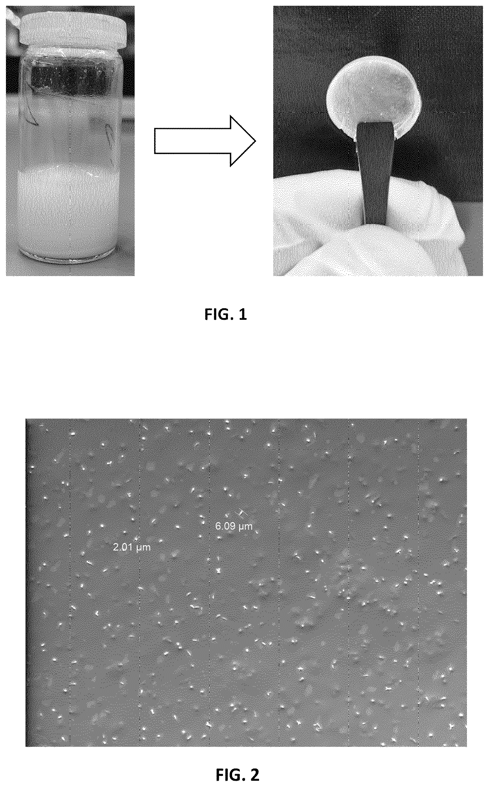

The results for the sol-gel process for forming the clay modified solid electrolyte 1 are shown in FIG. 1. All components could be completely dissolved in the sol and the self-standing solid pellet displayed no agglomerated or crystallized domains at the macroscopic level, which was attributed to the homogeneous dispersion of HNT.

As demonstrated in FIG.2, a Scanning electron microscopy (SEM) image of the self-standing solid pellet clearly confirmed the homogeneous distribution of HNT at the microscopic level. In addition, small and dispersed domains of HNT of around 2.0 to 6.0 µm could be identified within the composite network.

SEM images of the solid electrolyte composition obtained according to a method of the invention, preferably as a self-standing film, may be taken with a Nova microscope with an operating voltage between 3 and 5 kV, a working distance between 5 and 6 mm, and image acquisition in secondary electron mode.

### Example 3

Example 3 illustrates the impact of producing a clay modified solid electrolyte using a different amount of sodium polyphosphate with a fixed amount of halloysite nanotubes (5 wt.%, with wt.% based on the total weight of the clay modified solid electrolyte) by using the synthesis protocol described in Example 1.

The procedure of Example 1 was repeated with the difference that 0.535 g of halloysite nanotubes, 0.0161 g of sodium polyphosphate, and 2.949 g of water solvent were added to the mixture under continuous stirring, resulting in clay modified solid electrolyte 8.

The procedure of Example 1 was repeated with the difference that 0.535 g of halloysite nanotubes, 0.027 g of sodium polyphosphate, and 2.949 g of water solvent were added to the mixture under continuous stirring, resulting in clay modified solid electrolyte 9.

The procedure of Example 1 was repeated with the difference that 0.535 g of halloysite nanotubes, 0.053 g of sodium polyphosphate, and 2.949 g of water solvent were added to the mixture under continuous stirring, resulting in clay modified solid electrolyte 10.

The procedure of Example 1 was repeated with the difference that 0.535 g of halloysite nanotubes, 0.107 g of sodium polyphosphate, and 2.949 g of water solvent were added to the mixture under continuous stirring, resulting in clay modified solid electrolyte 11.

The procedure of Example 1 was repeated with the difference that 0.535 g of halloysite nanotubes, 0.2675 g of sodium polyphosphate, and 2.949 g of water solvent were added to the mixture under continuous stirring, resulting in clay modified solid electrolyte 12.

**Table 1** below shows an overview of the aforementioned compositions of each solid electrolyte sample and the comparatives examples.

**Table 1. Comparison of the composition of solid electrolytes (SE).**

| Sample number | wt.% of HNT (vs total wt.% SE) | wt.% of sodium polyphosphate (vs HNT wt%) | wt.% of sodium polyphosphate (vs total wt SE) | wt.% Ionic Liquid (vs total wt SE) | Molarity Li salt (Mol/L) | Ionic conductivity (mS.cm⁻¹) |
|---|---|---|---|---|---|---|
| | | | | | | |
| Clay modified SE 1 | 1 | 10 | 0.1 | 49 | 1.5 | * |
| Clay modified SE 2 | 1.3 | 10 | 0.13 | 49 | 1.5 | * |
| Clay modified SE 3 | 2 | 10 | 0.2 | 48 | 1.5 | 1.6 |
| Clay modified SE 4 | 3 | 10 | 0.3 | 48 | 1.5 | 1.9 |
| Clay modified SE 5 | 4 | 10 | 0.4 | 48 | 1.5 | 1.7 |
| Clay modified SE 6 | 5 | 10 | 0.5 | 48 | 1.5 | 2.1 |
| Clay modified SE 7 | 7 | 10 | 0.7 | 48 | 1.5 | 1.9 |
| Clay modified SE 8 | 5 | 3 | 0.15 | 47 | 1.5 | * |
| Clay modified SE 9 | 5 | 5 | 0.25 | 47 | 1.5 | * |
| Clay modified SE 10 | 5 | 10 | 0.5 | 47 | 1.5 | * |
| Clay modified SE 11 | 5 | 20 | 1 | 47 | 1.5 | * |
| Clay modified SE 12 | 5 | 50 | 2.5 | 46 | 1.5 | * |
| Comp. Example 1 | 2 | 0 | 0 | 48 | 1.5 | 1.0 |
| Comp. Example 2 | 5 | 0 | 0 | 47 | 1.5 | * |

| | | | | | | |
|---|---|---|---|---|---|---|
| *not measured | | | | | | |

### Comparative Example 1

Comparative Example 1 illustrates the impact of producing a clay modified solid electrolyte without any dispersing agent. To that end, the synthesis protocol of Example 1 was repeated with the difference that 0.21 g of halloysite nanotubes, and 2.949 g of water solvent were added to the mixture under continuous stirring, resulting in Comparative Example 1.

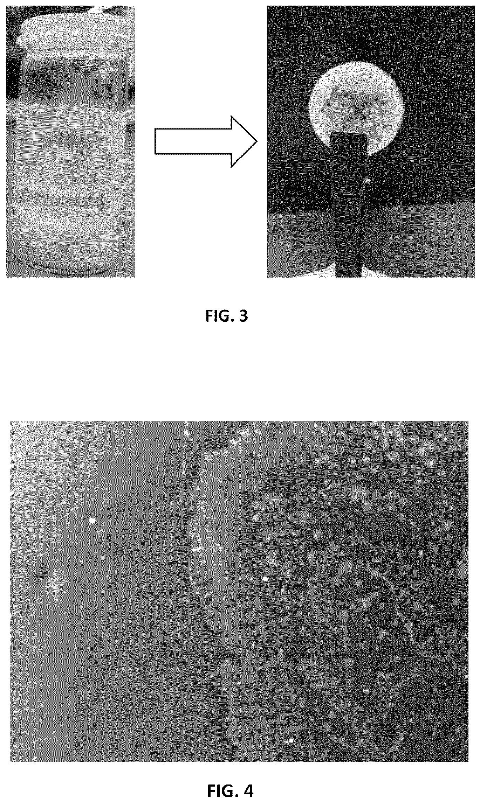

It is clearly observed from **FIG.3** that the sol and clay modified solid electrolyte of Comparative Example 1 did not display good dispersion of HNT without the addition of the phosphate-based dispersing agent.

In particular, a precipitate was formed in the sol, resulting in agglomerated and/or crystallized domains at the macroscopic level in the self-standing solid pellet. As demonstrated in **FIG.4****,** a SEM image of the self-standing solid pellet confirmed the inhomogeneous distribution of HNT within the composite network at the microscopic level.

### Example 4

The impact of the concentration of the halloysite nanotubes and presence of sodium polyphosphate on both the electrochemical properties and mechanical properties of the clay modified solid electrolyte was assessed by comparing ion conductivity (σ) of clay modified solid electrolyte 3-7 from Example 2 and the solid electrolyte of Comparative Example 1.

As shown in **Table 2** below, addition of sodium polyphosphate significantly increased the ionic conductivity of the clay modified solid electrolyte with about 60%. Moreover, by increasing the content of HNT, while keeping the relative amount of sodium polyphosphate the same, the ionic conductivity of the clay modified solid electrolyte is increased further still.

**Table 2. Comparison of ionic conductivity and damping factor (tan δ) of clay modified solid electrolytes with a different wt.% of halloysite nanotubes (HNT) and with or without sodium polyphosphate measured at 20 °C.**

| Sample no. | wt.% of HNT | wt.% of sodium polyphosphate | Ionic conductivity (mS.cm⁻¹) | Damping factor (tan δ) |
|---|---|---|---|---|
| clay modified solid electrolyte 3 | 2.0 wt.% | 10.0 wt.% | 1.6 | 0.12 |
| clay modified solid electrolyte 4 | 3.0 wt.% | 10.0 wt.% | 1.9 | 0.12 |
| clay modified solid electrolyte 5 | 4.0 wt.% | 10.0 wt.% | 1.7 | 0.08 |
| clay modified solid electrolyte 6 | 5.0 wt.% | 10.0 wt.% | 2.1 | 0.05 |
| clay modified solid electrolyte 7 | 7.0 wt.% | 10.0 wt.% | 1.9 | 0.11 |
| Comparative Example 1 | 2.0 wt.% | 0 wt.% | 1.0 | 0.31 |

To measure the conductivity of each clay modified solid electrolyte, each respective clay modified solid electrolyte was sandwiched between stainless steel electrodes to form electrolytic cell 1. Next, an alternating potential is applied to the electrolytic cell with an amplitude of 10 mV within a frequency range of 10 kHz to 500 kHz. The resulting alternating current flowing through the cell is measured via electrical impedance spectroscopy (EIS) and converted to conductivity values.

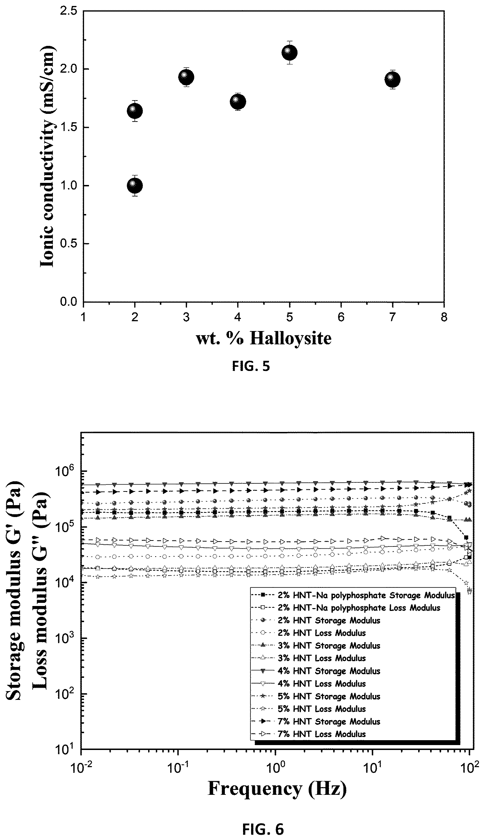

The electrochemical properties of clay modified solid electrolyte 3-7 from Example 2 and the solid electrolyte of Comparative Example 1 are depicted in **FIG.5****.** Based on the results in FIG.5, an increasing trend in ionic conductivity is observed when increasing the amount of HNT dispersed in the composite network.

Electrical impedance spectroscopy (EIS) may be used to determine the electromechanical properties of the solid electrolyte composition obtained according to a method of the invention, preferably as an electrolytic cell comprising said composition, by applying an alternating potential with an amplitude of 10 mV and within a frequency range of 10 kHz to 500 kHz. A suitable device for EIS includes a VMP-3 BioLogic instrument.

Moreover, viscoelastic properties of the aforementioned clay modified solid electrolytes were compared to assess the impact on mechanical stability. To measure the viscoelastic properties of each clay modified solid electrolyte, pellets of 15 mm diameter were used. The damping factor (tan δ), as calculated from the ratio of the loss modulus G" and the storage modulus G', was measured using oscillatory frequency sweep measurements at a constant shear strain of 1% and a variable frequency from 0.01 Hz to 100 Hz at 20 °C. The constant shear strain of 1% was in the linear viscoelastic (LVE) range of each pellet sample.

As shown in **Table 1** and **FIGs. 6-7****,** addition of sodium polyphosphate leads to a lower damping factor due to an increase in storage modulus G' and higher mechanical strength, resulting in a more elastic behaviour which is required to resist commonly observed dendrite growth of the metal anode. In addition, increasing the content of HNT, while keeping the relative amount of sodium polyphosphate the same, gradually increased the storage modulus G' until 5.0 wt.%. A higher HNT content of 7.0 wt.% resulted in a decrease of the storage modulus G'.

Oscillatory frequency sweep measurements can be measured on a rotational rheometer operating in oscillatory mode.

From the data of **Table 1** and **Table 2** above, it follows that the present invention provides an optimized balance between mechanical properties and ionic conductivity of the clay modified solid electrolyte.

### Comparative Example 2

Comparative Example 2 illustrates another example of a clay modified solid electrolyte without any dispersing agent. To that end, the synthesis protocol of Example 1 was repeated with the difference that 0.535 g of halloysite nanotubes, and 2.949 g of water solvent were added to the mixture under continuous stirring, resulting in Comparative Example 2.

### Example 5

The impact of the presence of sodium polyphosphate on electrochemical properties and thermal properties was further investigated by comparing clay modified solid electrolyte 9 of Example 3 and Comparative Example 2.

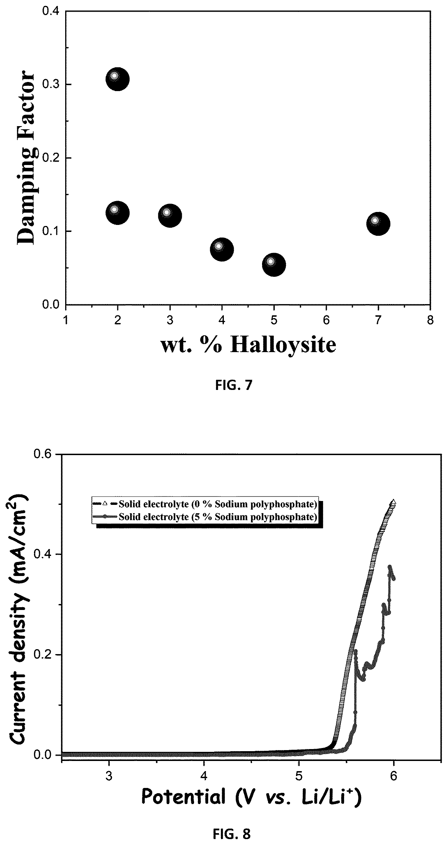

As shown in **Table 3** below, and **FIGs. 8-9****,** addition of sodium polyphosphate enhances the electrochemical stability window (ESW) and anodic current limit of the solid electrolyte. Hence, the modified solid electrolyte as described herein, using a phosphate-based dispersing agent, may provide a more stable working voltage during charge-discharge and provide a higher anodic current limit when compared to what is disclosed in the state of the art.

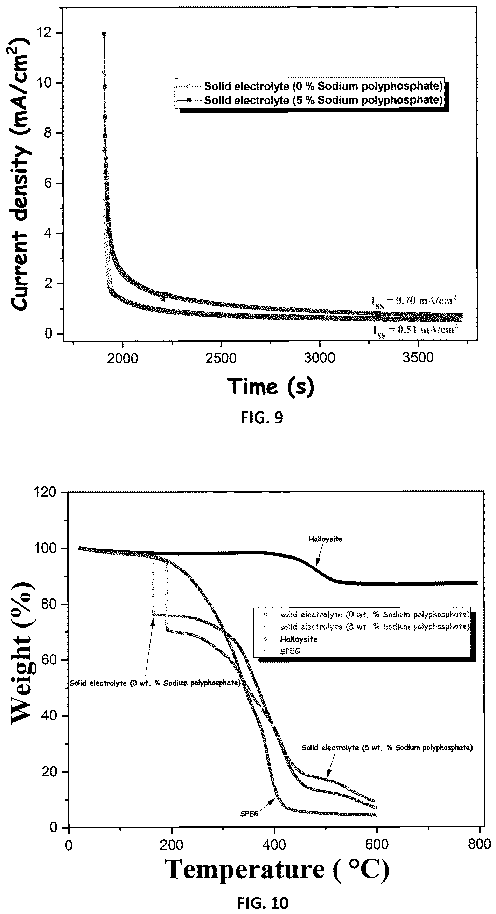

Moreover, as shown in **FIG. 10****,** the addition of sodium polyphosphate also increased the thermal stability of the solid electrolyte with an increase of around 20 °C as determined at 5 wt.% mass loss by dynamic thermogravimetric analysis (TGA).

**Table 3. Comparison of electrochemical stability window (ESW) and anodic current limit of a clay modified solid electrolyte with 1 wt.% of HNT and 5 wt.% of sodium polyphosphate and a clay modified solid electrolyte without sodium polyphosphate measured at 20 °C.**

| Sample no. | wt.% of HNT | wt.% of sodium polyphosphate | ESW (V) | Anodic current limit (mA cm⁻²) | T_{d5%} (°C) |
|---|---|---|---|---|---|
| clay modified solid electrolyte 9 | 5.0 wt.% | 5.0 wt.% | 5.5 | 0.70 | 185 |
| Comparative Example 2 | 5.0 wt.% | 0 wt.% | 5.3 | 0.51 | 165 |

Linear sweep voltammetry (LSV) was used to determine the electrochemical stability window (ESW) of the solid electrolyte obtained according to a method of the invention, preferably as an electrolytic cell comprising said composition. A typical linear sweep voltammetry (LSV) experiment was conducted on an electrolytic SUS | | Li cell assembled with solid electrolyte film in a crimped coin cell with a scan rate of 20 mV/s.

To measure the anodic current limit, each respective composition was sandwiched between Li electrodes to form electrolytic cell 2. Next, voltammetry experiments were conducted by measuring the current as a function of potential using chronoamperometry at 1 V. The maximum current observed is the anodic current limit.

To measure the thermal stability, each respective solid electrolyte was prepared into pellets of 20 mm of diameter. Subsequently, a sample was taken and subjected to dynamic TGA conducted under nitrogen at a heating rate of 10 °C.min⁻¹ from 25 °C to 800 °C. The thermal stability can be determined from the temperature at 5% weight loss.

### Example 6

Example 6 illustrates the charge and discharge efficiency of clay modified solid electrolytes, with a different concentration of HNT and a fixed amount of sodium polyphosphate (10 wt.%), when used for the impregnation of a cathode.

To that end, a cathode was impregnated by providing a precursor solution according to the procedure of Example 1 with the difference that the sol was drop-cast in the cathode instead of a coin cell, resulting in cathode 1.

The aforementioned procedure of drop-casting the precursor solution in the cathode was repeated with the difference that 0.13 g of halloysite nanotubes, 0.013 g of sodium polyphosphate, and 2.949 g of water solvent were added to the mixture under continuous stirring, resulting in cathode 2.

The aforementioned procedure of drop-casting the precursor solution in the cathode was repeated with the difference that 0.315 g of halloysite nanotubes, 0.0315 g of sodium polyphosphate, and 2.949 g of water solvent were added to the mixture under continuous stirring, resulting in cathode 3.

Next, the performance characteristics of the impregnated cathodes 1-3, voltage changes during discharge were measured after 3 cycles. As shown in **Table 4** below, the discharge capacity and coulombic efficiency increased after 3 cycles with increasing HNT content.

**Table 4. Comparison of discharge capacity and coulombic efficiency of cathodes 1-3 impregnated with clay modified solid electrolyte and measured after 3 cycles at 20 °C.**

| Cathode no. | wt.% of HNT | wt.% of sodium polyphosphate | Thickness (µm) | Discharge capacity (mA h/g) | Coulombic efficiency (%) |
|---|---|---|---|---|---|
| Cathode 1 | 1.0 wt.% | 10.0 wt.% | 125.0 | 84.0 | 35.0 |
| Cathode 2 | 1.3 wt.% | 10.0 wt.% | 110.0 | 121.0 | 50.0 |
| Cathode 3 | 3.0 wt.% | 10.0 wt.% | 150.0 | 123.0 | 95.0 |

### Example 7

Example 7 illustrates the impact of the addition of the phosphate-based dispersing agent on the properties of the clay modified solid electrolyte when applied in a lithium battery.

A lithium battery coin cell was constructed by sandwiching the clay modified solid electrolyte 9 of Example 3 of around 220 µm thickness between a Li electrode and a LiFePO₄ electrode. The same procedure was repeated for Comparative Example 2. To determine the performance characteristics of the obtained lithium battery, voltage changes during discharge were measured.

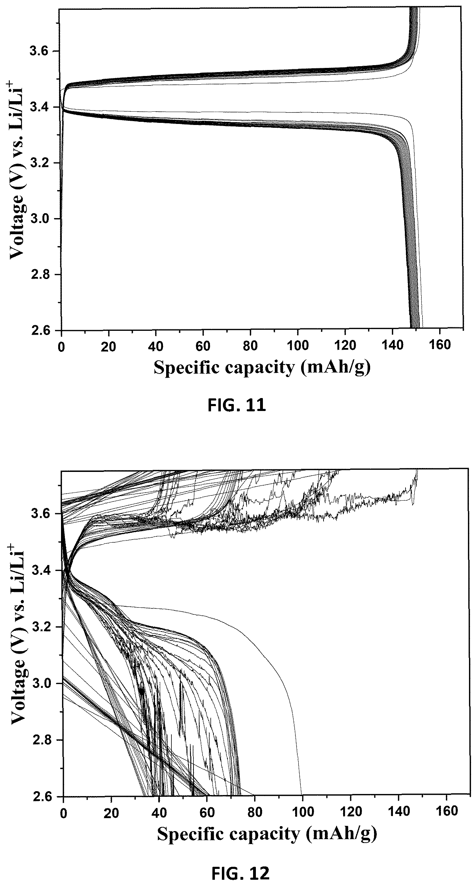

**FIG.11** illustrates the electrochemical properties of the lithium battery comprising clay modified solid electrolyte 9 of Example 3. The discharge curve was obtained by cycling the lithium battery at a constant current of C/10 (1C = 165 mA g⁻¹ as referred to the mass of cathode active material) at 20 °C. From FIG.11, it follows that the lithium battery comprising clay modified solid electrolyte 9 of Example 3 works efficiently for at least 20 cycles with a stable specific discharge capacity of 148 mAh/g and around 99% coulombic efficiency.

**FIG.12** illustrates the electrochemical properties of the lithium battery comprising clay modified solid electrolyte of Comparative Example 2. In contrast to FIG.11, FIG.12 shows that without the addition of sodium polyphosphate to aid in the dispersion of HNT, the lithium battery showed a rapid capacity fade.

### Example 8

Example 8 illustrates the impact of the addition of the phosphate-based dispersing agent on the properties of the clay modified solid electrolyte when applied in a lithium battery with an overfill of solid electrolyte material.

A lithium battery coin cell was constructed by sandwiching the clay modified solid electrolyte 9 of Example 3 of around 220 µm thickness between a Li electrode and a LiNi_{0.6}Mn_{0.2}Co_{0.2}O₂ electrode, resulting in an overfill of around 30 µm thickness. The same procedure was repeated for Comparative Example 2. To determine the performance characteristics of the obtained lithium battery, voltage changes during discharge were measured.

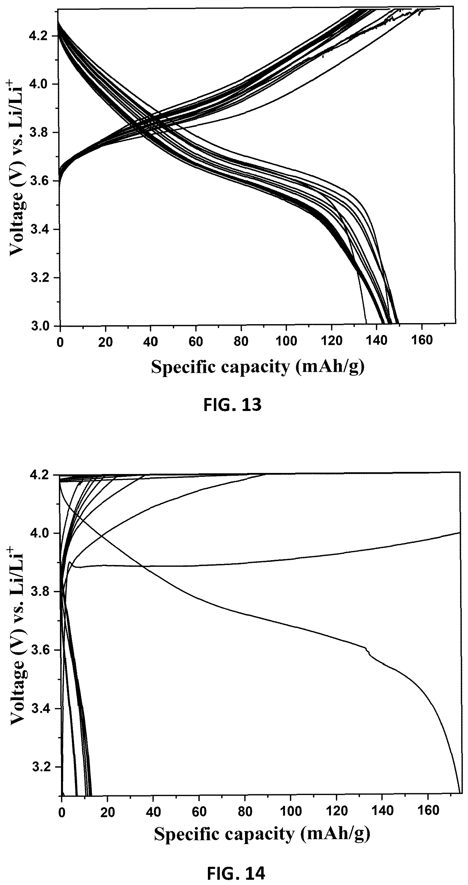

**FIG. 13** shows the electrochemical properties of the lithium battery comprising clay modified solid electrolyte 9 of Example 3 with an overfill of around 30 µm thickness. The discharge curve was obtained by cycling the lithium battery at a constant current of C/10 (1C = 165 mA g⁻¹ as referred to the mass of cathode active material) at 20 °C.

From FIG.13, it follows that the lithium battery comprising clay modified solid electrolyte 9 of Example 3 (i.e., comprising dispersing agent) provides a flat voltage plateau (around 3.4-3.7 V). Hence, allowing a more stable working voltage during charge-discharge. In addition, this leads to an increase in the lithium ion transference number, while simultaneously reducing polarization and inhibiting the formation of lithium dendrites. Said properties are desirable for constructing commercially relevant and safe lithium batteries.

**FIG.14** shows the electrochemical properties of the lithium battery comprising clay modified solid electrolyte of Comparative Example 2 with an overfill of around 30 µm. In contrast to FIG.13, FIG.14 shows that no flat voltage plateau could be obtained for the lithium battery comprising clay modified solid electrolyte of Comparative Example 2 (i.e., without dispersing agent).

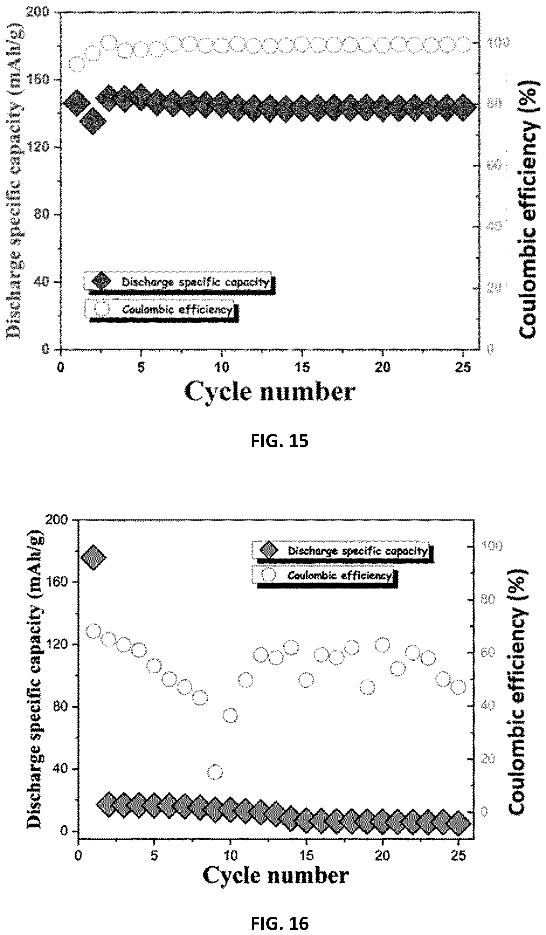

In addition, **FIG. 15** illustrates the high discharge specific capacity of around 143 mAh/g and coulombic efficiency of around 99% of the lithium battery comprising clay modified solid electrolyte 9 of Example 3 with an overfill of around 30 µm thickness measured for 25 cycles at 20 °C and 0.1 C.

In contrast, **FIG.16** shows the significantly lower and variable discharge specific capacity of around 10 mAh/g and coulombic efficiency of around 40-60% of the lithium battery comprising clay modified solid electrolyte of Comparative Example 2 with an overfill of around 30 µm thickness measured for 25 cycles at 20 °C and 0.1 C.

## Claims

1. A clay mineral modified solid electrolyte **characterized by** comprising the following components:
- a porous composite network obtained or obtainable by a reaction of an alkoxide compound and a polyether compound; wherein the alkoxide compound is selected from the group consisting of silica alkoxide, alumina alkoxide, zirconium alkoxide, and mixtures thereof; wherein the polyether compound comprises two end groups of which at least one end group is a functional end group selected from the group consisting of alkoxysilane, alkoxy aluminium, alkoxy zirconium, and combinations thereof;
- an electrolyte comprising an ionically conductive compound in which a metal salt is dissolved;
- clay mineral particles; and
- a phosphate-based dispersing agent.

2. The solid electrolyte according to claim 1, wherein the phosphate-based dispersing agent is a phosphate salt; preferably a multivalent phosphate salt comprising an alkali metal ion, an alkaline earth metal ion, an ammonium ion, and/or an organoammonium ion.

3. The solid electrolyte according to claim 1 or 2, wherein the phosphate-based dispersing agent is selected from the group consisting of monolithium phosphate, dilithium phosphate, trilithium phosphate, monolithium diphosphate, dilithium diphosphate, trilithium diphosphate, tetralithium diphosphate, lithium triphosphate, lithium tetraphosphate, lithium metaphosphate, lithium trimetaphosphate, lithium hexametaphosphate, lithium pyrophosphate, dilithium pyrophosphate, lithium polyphosphate, monosodium phosphate, disodium phosphate, trisodium phosphate, monosodium diphosphate, disodium diphosphate, trisodium diphosphate, tetrasodium diphosphate, sodium triphosphate, sodium tetraphosphate, sodium metaphosphate, sodium trimetaphosphate, sodium hexametaphosphate, sodium pyrophosphate, disodium pyrophosphate, sodium polyphosphate, monopotassium phosphate, dipotassium phosphate, tripotassium phosphate, monopotassium diphosphate, dipotassium diphosphate, tripotassium diphosphate, tetrapotassium diphosphate, potassium triphosphate, potassium tetraphosphate, potassium metaphosphate, potassium trimetaphosphate, potassium hexametaphosphate, potassium pyrophosphate, dipotassium pyrophosphate, potassium polyphosphate hydrates thereof and/or mixtures thereof;
preferably wherein the phosphate-based dispersing agent is selected from the group consisting of lithium hexametaphosphate, sodium hexametaphosphate, potassium hexametaphosphate, lithium polyphosphate, sodium polyphosphate, potassium polyphosphate, hydrates thereof and/or mixtures thereof.

4. The solid electrolyte according to any one of the preceding claims, wherein the clay mineral particles comprise structures with a tubular or nanotubular shape having a negatively charged exterior and a positively charged hollow interior.

5. The solid electrolyte according to any one of the preceding claims, wherein the clay mineral particles comprise halloysite nanotubes (HNT) comprising aluminosilicate (Al₂Si₂O₅(OH)₄).

6. The solid electrolyte according to any one of the preceding claims, wherein the amount of clay mineral particles is at least 0.1 wt.% to at most 10.0 wt.%, based on the total weight of the clay mineral modified solid electrolyte.

7. The solid electrolyte according to any one of the preceding claims, wherein the amount of phosphate-based dispersing agent is at least 0.1 wt.% to at most 20.0 wt.%, based on the weight of the clay mineral particles.

8. A method for preparing a clay mineral modified solid electrolyte, preferably a clay mineral modified solid electrolyte according to any one of the preceding claims, comprising the steps of:
- mixing an alkoxide compound selected from the group consisting of silica alkoxide, alumina alkoxide, zirconium alkoxide, and mixtures thereof; a polyether compound comprising two end groups of which at least one end group is a functional end group selected from the group consisting of alkoxysilane, alkoxy aluminium, alkoxy zirconium, and combinations thereof; an ionically conductive compound, a metal salt, clay mineral particles, a phosphate-based dispersing agent, and a solvent to form a liquid mixture;
- causing gelation of the liquid mixture to form a gel mixture; and
- drying and/or ageing the gel mixture to form a solid electrolyte.

9. The method according to claim 8, wherein silica alkoxide is selected from the group consisting of tetramethyl orthosilicate (TMOS), tetraethyl orthosilicate (TEOS), methyltriethoxysilane (MTES), tetraisopropyl orthosilicate (TIOS), tetrapropyl orthosilicate (TPOS), tetrabutyl orthosilicate (TBOS), substitutions thereof, and/or a combination thereof; and/or
wherein alumina alkoxide is selected from the group consisting of aluminium trimethoxide, aluminium triethoxide, aluminium triisopropoxide, aluminium tributoxide, substitutions thereof, and/or a combination thereof; and/or
wherein zirconium alkoxide is selected from the group consisting of zirconium tetramethoxide, zirconium tetraethoxide, zirconium tetraisopropoxide, zirconium tetrabutoxide, substitutions thereof, and/or a combination thereof.

10. The method according to any one of claims 8 or 9, wherein the polyether compound is selected from the group consisting of polyethylene glycol, polypropylene glycol, polytetrahydrofuran, and copolymers and/or mixtures thereof.

11. The method according to any one of claims 8 to 10, wherein the polyether compound comprises one reactive functional end group selected from the group consisting of alkoxysilane, alkoxy aluminium, alkoxy zirconium, and combinations thereof; and one non-reactive alkyl end group, preferably wherein the polyether compound has a number of repeating units n ranging from 5 to 2000; and/or,
wherein the polyether compound comprises two reactive functional end groups selected from the group consisting of alkoxysilane, alkoxy aluminium, alkoxy zirconium, and combinations thereof; preferably wherein the polyether compound has a number of repeating units n ranging from 5 to 15000.

12. An electrode comprising the clay mineral modified solid electrolyte according to any one of claims 1 to 7, or obtained or obtainable by means of the method according to any one of claims 8 to 11; and one or more electrode active materials.

13. The electrode according to claim 12, wherein the clay mineral modified solid electrolyte forms a covering layer on the electrode active material; preferably wherein the covering layer is a uniform and/or homogenous covering layer with a preferred layer thickness after drying and before compression of below about 200 µm, more preferably below about 150 µm, more preferably still below about 100 µm; more preferably still below about 60 µm.

14. Electrochemical energy storage device, comprising one or more positive electrodes, one or more negative electrodes; and the clay mineral modified solid electrolyte, according to any one of claims 1 to 7, or obtained or obtainable by means of the method according to any one of claims 8 to 11;
preferably wherein the clay mineral modified solid electrolyte forms a covering layer on at least one of the one or more positive electrode and/or one or more negative electrode.

15. Use of a phosphate-based dispersing agent for the homogeneous dispersion of an inorganic filler, preferably clay mineral particles, into a solid electrolyte, preferably a clay mineral modified solid electrolyte according to any one of claims 1 to 7, or obtained or obtainable by means of the method according to any one of claims 8 to 11.
